# EUROPEAN PATENT APPLICATION

(11) **EP 4 832 516 A1**
(43) Date of publication of application: **28.10.2026**
(21) Application number: 25755211.7
(22) Date of filing: 14.02.2025
(51) Int. Cl.: H04W 4/12, H04W 60/04, H04W 76/10, H04W 84/06, H04W 88/18

(54) **METHOD AND DEVICE FOR SUPPORTING SMS SERVICE USING STORE AND FORWARD OPERATION OF SATELLITE**

(30) Priority: 16.02.2024 KR 20240022630; 17.05.2024 KR 20240064705
(71) Applicant: Samsung Electronics Co., Ltd., Suwon-si, Gyeonggi-do 16677 (KR)
(72) Inventor: BAE, Jaehyeon, Suwon-si, Gyeonggi-do 16677 (KR); KIM, Dongyeon, Suwon-si, Gyeonggi-do 16677 (KR); LEE, Hoyeon, Suwon-si, Gyeonggi-do 16677 (KR); LEE, Jicheol, Suwon-si, Gyeonggi-do 16677 (KR)
(74) Representative: Nederlandsch Octrooibureau
(86) International application number: PCT/KR2025/099409
(87) International publication number: WO 2025/174215

(57) **Abstract**

The present disclosure relates to a 5G or 6G communication system for supporting higher data transmission rates. Disclosed is a method for processing a control signal in a wireless communication system of a communication system, the method comprising the steps of: receiving a first control signal transmitted from a terminal; processing the received first control signal; and transmitting, to the terminal, a second control signal generated on the basis of the processing.

## Description

### [Technical Field]

The disclosure relates to a method and apparatus for SMS transmission and reception using store and forward (S&F) operation of a satellite in a communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultrahigh-performance communication and computing resources.

### [Disclosure of Invention]

### [Technical Problem]

To support communication services in a shadow area or outside the coverage of a communication system, an LTE evolved packet core (EPC) entity or 5G network function (NF) may be located on a satellite, and a terminal may make service registration and request to directly use communication services by utilizing an eNodeB or gNB within the satellite. In 4G systems or evolved 5G systems, some or all of the system components may be located on one or more satellites, and in such a system configuration, a method may be required to provide a connection between the control plane and the user plane. In particular, to utilize short message service (SMS) services through the control plane, different mobility management entities (MMEs) supporting 'SMS in MME' may be located at the satellite and ground station, or short message service-gateway mobile switching center (SMS-GMSC) or short message serviceinterworking mobile switching center (SMS-IWMSC) may be located at the satellite and ground station, respectively. Low Earth orbit satellites may change their positions over time. Hence, the service link between the satellite and the terminal and the feeder link between the satellite and the ground station may be established or terminated accordingly.

The disclosure proposes a method and apparatus for supporting SMS services utilizing connection state information about a service link between the satellite and the terminal and connection state information about a feeder link between the satellite and the ground station according to a change in the position of a low Earth orbit satellite.

### [Solution to Problem]

There are proposed a method in which, according to the state information about the satellite's service link and feeder link, the MME or AMF within a satellite receives a mobile originated (MO) or mobile terminated (MT) SMS message from a UE or service center (SC), buffers the MO SMS or MT SMS within the SMS-GMSC or short message service function (SMSF), and transfers the corresponding information to the UE or SC after the service link and feeder link are connected, and a method for delivering information to support the corresponding operation.

In the disclosure to solve the above problems, a method performed by a first mobility management entity (MME) in a wireless communication system may include: receiving, from a user equipment (UE), an uplink (UL) non-access-stratum (NAS) transport message including a mobile oriented (MO) short message service (SMS); transmitting, to the UE, a downlink (DL) NAS transport message including information indicating whether the MO SMS has been received in case that a feeder link is not connected; and transmitting the MO SMS to a second MME in case that the feeder link is connected, wherein the first MME and the second MME may be separated.

In an embodiment, the first MME may be located on a satellite, and the second MME may be located at a ground station.

In an embodiment, the method may further include buffering the MO SMS for a preset time in case that the feeder link is not connected.

In an embodiment, the method may further include storing the MO SMS in case that the feeder link is not connected.

Additionally, in another embodiment of the disclosure, a method performed by a user equipment (UE) in a wireless communication system may include: transmitting, to a first mobility management entity (MME), an uplink (UL) non-access-stratum (NAS) transport message including a mobile oriented (MO) short message service (SMS); and receiving, from the first MME, a downlink (DL) NAS transport message including information indicating whether the MO SMS has been received in case that a feeder link is not connected, wherein the MO SMS may be forwarded from the first MME to a second MME in case that the feeder link is connected, and wherein the first MME and the second MME may be separated.

Additionally, in another embodiment of the disclosure, a first mobility management entity (MME) in a wireless communication system may include: a transceiver capable of transmitting and receiving at least one signal; and a controller coupled to the transceiver, wherein the controller may be configured to: receive, from a user equipment (UE), an uplink (UL) non-access-stratum (NAS) transport message including a mobile oriented (MO) short message service (SMS); and transmit, to the UE, a downlink (DL) NAS transport message including information indicating whether the MO SMS has been received in case that a feeder link is not connected, and transmit the MO SMS to a second MME in case that the feeder link is connected, wherein the first MME and the second MME may be separated.

Additionally, in another embodiment of the disclosure, a user equipment (UE) in a wireless communication system may include: a transceiver capable of transmitting and receiving at least one signal; and a controller coupled to the transceiver, wherein the controller may be configured to: transmit, to a first mobility management entity (MME), an uplink (UL) non-access-stratum (NAS) transport message including a mobile oriented (MO) short message service (SMS); and receive, from the first MME, a downlink (DL) NAS transport message including information indicating whether the MO SMS has been received in case that a feeder link is not connected, wherein the MO SMS may be forwarded from the first MME to a second MME in case that the feeder link is connected, and wherein the first MME and the second MME may be separated.

### [Advantageous Effects of Invention]

Based on information about the connection state and link connection available time for the service link between the satellite and the UE and the feeder link between the satellite and the ground station in consideration of the position change of the low Earth orbit satellite, it is possible to support SMS services in an EPC entity or in a 5G NF within the satellite.

### [Brief Description of Drawings]

FIG. 1A is a diagram illustrating the network architecture and interfaces of a 5G system according to an embodiment of the disclosure.
FIG. 1B is a diagram illustrating a network architecture and interfaces for supporting SMS services on a satellite utilizing a 4G system-based control plane according to an embodiment of the disclosure.
FIG. 1C is a diagram illustrating a network architecture and interfaces for supporting SMS services on a satellite utilizing a 5G system-based control plane according to an embodiment of the disclosure.
FIG. 2AA is a sequence diagram for transmitting network structure and related information for supporting on a satellite an MO SMS service requested by a UE by utilizing a 4G system-based control plane according to an embodiment of the disclosure.
FIG. 2AB is a sequence diagram for transmitting network structure and related information for supporting on a satellite an MO SMS service requested by a UE by utilizing a 4G system-based control plane according to an embodiment of the disclosure.
FIG. 2BA is a sequence diagram for transmitting network structure and related information for supporting on a satellite an MO SMS service requested by a UE by utilizing a 4G system-based control plane according to an embodiment of the disclosure.
FIG. 2BB is a sequence diagram for transmitting network structure and related information for supporting on a satellite an MO SMS service requested by a UE by utilizing a 4G system-based control plane according to an embodiment of the disclosure.
FIG. 3A is a sequence diagram for transmitting network structure and related information for supporting on a satellite an MO SMS service requested by a UE by utilizing a 4G system-based control plane according to an embodiment of the disclosure.
FIG. 3B is a sequence diagram for transmitting network structure and related information for supporting on a satellite an MO SMS service requested by a UE by utilizing a 4G system-based control plane according to an embodiment of the disclosure.
FIG. 4A is a sequence diagram for transmitting network structure and related information for supporting on a satellite an MT SMS service requested by the SC by utilizing a 4G system-based control plane according to an embodiment of the disclosure.
FIG. 4B is a sequence diagram for transmitting network structure and related information for supporting on a satellite an MT SMS service requested by the SC by utilizing a 4G system-based control plane according to an embodiment of the disclosure.
FIG. 4C is a sequence diagram for transmitting network structure and related information for supporting through multiple satellites an MT SMS service requested by the SC by utilizing a 4G system-based control plane according to an embodiment of the disclosure.
FIG. 4D is a sequence diagram for transmitting network structure and related information for supporting through multiple satellites an MT SMS service requested by the SC by utilizing a 4G system-based control plane according to an embodiment of the disclosure.
FIG. 5A is a sequence diagram for transmitting network structure and related information for supporting on a satellite an MO SMS service requested by a UE by utilizing a 4G system-based control plane according to an embodiment of the disclosure.
FIG. 5B is a sequence diagram for transmitting network structure and related information for supporting on a satellite an MO SMS service requested by a UE by utilizing a 4G system-based control plane according to an embodiment of the disclosure.
FIG. 6A is a sequence diagram for transmitting network structure and related information for supporting on a satellite an MT SMS service requested by the SC by utilizing a 4G system-based control plane according to an embodiment of the disclosure.
FIG. 6B is a sequence diagram for transmitting network structure and related information for supporting on a satellite an MT SMS service requested by the SC by utilizing a 4G system-based control plane according to an embodiment of the disclosure.
FIG. 6C is a sequence diagram for transmitting network structure and related information for supporting through multiple satellites an MT SMS service requested by the SC by utilizing a 4G system-based control plane according to an embodiment of the disclosure.
FIG. 7A is a sequence diagram for transmitting network structure and related information for supporting on a satellite an MO SMS service requested by a UE by utilizing a 5G system-based control plane according to an embodiment of the disclosure.
FIG. 7B is a sequence diagram for transmitting network structure and related information for supporting on a satellite an MO SMS service requested by a UE by utilizing a 5G system-based control plane according to an embodiment of the disclosure.
FIG. 8A is a sequence diagram for transmitting network structure and related information for supporting on a satellite an MT SMS service requested by the SC by utilizing a 5G system-based control plane according to an embodiment of the disclosure.
FIG. 8B is a sequence diagram for transmitting network structure and related information for supporting on a satellite an MT SMS service requested by the SC by utilizing a 5G system-based control plane according to an embodiment of the disclosure.
FIG. 8C is a sequence diagram for transmitting network structure and related information for supporting through multiple satellites an MT SMS service requested by the SC by utilizing a 5G system-based control plane according to an embodiment of the disclosure.
FIG. 8D is a sequence diagram for transmitting network structure and related information for supporting through multiple satellites an MT SMS service requested by the SC by utilizing a 5G system-based control plane according to an embodiment of the disclosure.
FIG. 9 is a diagram illustrating the structure of a UE according to an embodiment of the disclosure.
FIG. 10 is a diagram illustrating the structure of a network entity according to an embodiment of the disclosure.

### [Mode for the Invention]

Hereinafter, embodiments of the disclosure will be described in detail with reference to the accompanying drawings.

In describing the disclosure, technical details that are well known in the art to which the disclosure belongs and are not directly related to the disclosure will be omitted. This is intended to convey the subject matter of the disclosure more clearly without obscuring it by omitting unnecessary explanations. Further, the terms described below are defined in consideration of their functions in this disclosure, and these may vary depending on the intentions or practices of the user or operator. Therefore, their meanings should be determined based on the overall contents of this specification.

Likewise, in the drawings, some elements are exaggerated, omitted, or only outlined in brief. Also, the size of each element does not necessarily reflect the actual size. The same or similar reference symbols are used throughout the drawings to refer to the same or corresponding parts.

In the following description, a base station (BS) is an entity that performs resource allocation for terminals and may be at least one of gNode B, eNode B, Node B (or xNode B (where x is an alphabet including g or e)), a radio access unit, a base station controller, a satellite, an airborne, or a node on a network. A terminal (user equipment (UE)) may include a mobile station (MS), a vehicle, a satellite, an airborne, a cellular phone, a smartphone, a computer, or a multimedia system capable of performing communication functions. In the disclosure, a downlink (DL) refers to a wireless transmission path for a signal transmitted by a base station to a UE, and an uplink (UL) refers to a wireless transmission path for a signal transmitted by a UE to a base station. Additionally, there may be a sidelink (SL), which refers to a wireless transmission path of a signal transmitted from one UE to another UE.

Additionally, while the LTE, LTE-A or 5G system may be described below as an example, the embodiments of the disclosure may also be applied to other communication systems with similar technical backgrounds or channel types. For example, this may include 5G-Advance or NR-Advance or 6G mobile communication technology developed after 5G mobile communication technology (or new radio, NR), and the term "5G" below may be a concept that includes existing LTE, LTE-A and other similar services. In addition, the disclosure may be applied by a person skilled in the art to other communication systems with some modifications without significantly deviating from the scope of the disclosure.

Meanwhile, it is known to those skilled in the art that blocks of a flowchart (or sequence diagram) and a combination of flowcharts may be executed by computer program instructions. These computer program instructions may be loaded on a processor of a general purpose computer, special purpose computer or programmable data processing equipment. When the loaded program instructions are executed by the processor, they create a means for carrying out functions described in the flowchart. As the computer program instructions may be stored in a computer readable memory that is usable in a specialized computer or a programmable data processing equipment, it is also possible to create articles of manufacture that carry out functions described in the flowchart. As the computer program instructions may be loaded on a computer or a programmable data processing equipment, when executed as processes, they may carry out steps of functions described in the flowchart.

In addition, a block of a flowchart may correspond to a module, a segment or a code containing one or more executable instructions implementing one or more logical functions, or to a part thereof. In some cases, functions described by blocks may be executed in an order different from the listed order. For example, two blocks listed in sequence may be executed at the same time or executed in reverse order according to their corresponding functions.

In this embodiment, the word "unit", "module" or the like may refer to a software component or hardware component such as an FPGA (field programmable gate array) or ASIC (application specific integrated circuit) capable of carrying out a function or an operation. However, "unit" or the like is not limited to hardware or software. A unit or the like may be configured so as to reside in an addressable storage medium or to drive one or more processors. Units or the like may refer to software components, object-oriented software components, class components, task components, processes, functions, attributes, procedures, subroutines, program code segments, drivers, firmware, microcode, circuits, data, databases, data structures, tables, arrays or variables. A function provided by a component and unit may be a combination of smaller components and units, and may be combined with others to compose large components and units. Components and units may be configured to drive a device or one or more CPUs in a secure multimedia card. Also, in an embodiment, a unit or the like may include one or more processors.

To evolve from the 4G LTE system to the 5G system, 3GPP (Third Generation Partnership Project) in charge of cellular mobile communication standards has named a new core network architecture as 5G core (5GC) and is in the process of standardization. Compared to the evolved packet core (EPC) being the core for the 4G network, the 5GC supports the following differentiated functions.

A network slice functionality is introduced in the 5GC. As 5G requirements, the 5GC should support various types of terminals and services. The various types of terminals and services to be supported by the 5GC may include, for example, enhanced mobile broadband (eMBB), ultra-reliable low-latency communications (URLLC), and massive machine type communications (mMTC). Such various types of terminals/services have different requirements for the core network. For example, an eMBB service may require a high data rate, and a URLLC service may require high stability and low latency. Network slice technology has been proposed to satisfy these various service requirements.

Network slicing may refer to a way of creating multiple logical networks (e.g., network slices) based on the virtualization of a single physical network. An active network slice may be referred to as a network slice instance (NSI), and individual NSIs may have different characteristics. The mobile operator may satisfy various service requirements for terminals/services by configuring network functions (NFs) suited to the characteristics of individual NSIs. For example, the mobile operator may efficiently support various 5G services (e.g., eMBB, URLLC, or mMTC) by allocating an NSI that matches the characteristics of the service required by each terminal.

The 5GC may facilitate the support of the network virtualization paradigm by separating the mobility management function and the session management function. In 4G LTE, all terminals may receive services from the network through signaling exchange with a single core entity called mobility management entity (MME) that takes charge of registration, authentication, mobility management, and session management functions. In 5G, as the number of terminals (e.g., including MTC terminals) increases explosively and the mobility and traffic/session characteristics to be supported are subdivided according to the types of terminals, if all functions are supported by a single entity (e.g., MME), the scalability of adding an entity for each required function is inevitably reduced. Hence, to improve scalability in terms of function/implementation complexity and signaling load of the core entity in charge of the control plane, various functions are being developed based on the structure separating the mobility management function and the session management function.

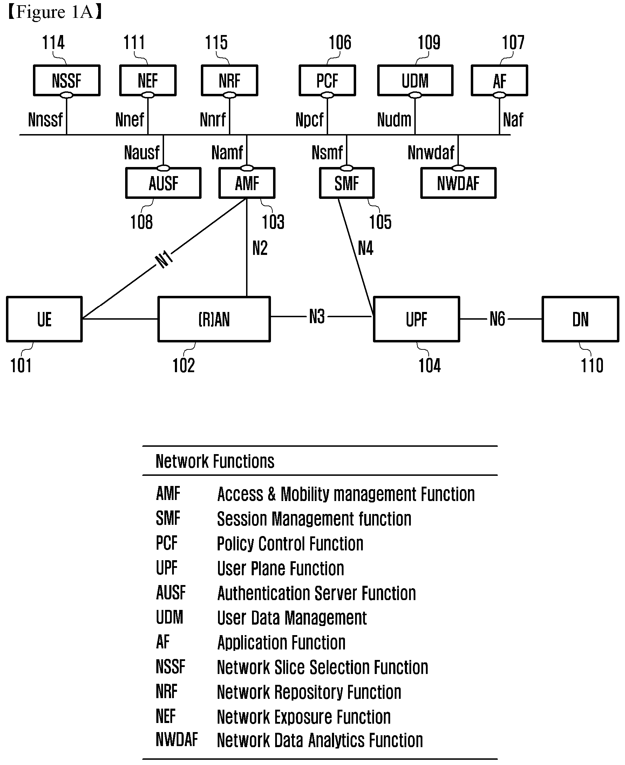

FIG. 1A is a diagram illustrating the network architecture and interfaces of a 5G system according to an embodiment of the disclosure.

The network entity included in the network architecture of the 5G system in FIG. 1A may include a network function (NF) according to the system implementation.

With reference to FIG. 1A, the network architecture of the 5G system 100 may include various network entities. For example, the 5G system 100 may include at least one of authentication server function (AUSF) entity 108, (core) access and mobility management function (AMF) entity 103, session management function (SMF) entity 105, policy control function (PCF) entity 106, application function (AF) entity 107, unified data management (UDM) entity 109, data network (DN) 110, network exposure function (NEF) entity 113, network slicing selection function (NSSF) entity 114, user plane function (UPF) entity 104, (radio) access network ((R)AN) 102, or terminal such as a user equipment (UE) 101.

The NF entities of the 5G system 100 support the following functions.

The AUSF 108 processes and stores data for the authentication of the UE 101.

The AMF 103 provides functions for managing connectivity and mobility at the UE level, and one UE may be connected to one AMF by default. Specifically, the AMF 103 provides functions, such as signaling between CN nodes for mobility between 3GPP access networks, termination of the radio access network (RAN) CP interface (i.e., N2 interface), termination of NAS (non-access stratum) signaling (N1), NAS signaling security (NAS ciphering and integrity protection), AS security control, registration management (registration area management), connection management, idle mode UE reachability (including control and execution of paging retransmission), mobility management control (subscription and policy), support for intra-system mobility and inter-system mobility, support for network slicing, SMF selection, lawful interception (for AMF events and interfaces toward the LI system), delivery of session management (SM) messages between the UE and the SMF, transparent proxy for SM message routing, access authentication, access authorization including roaming permission checks, delivery of SMS messages between the UE and the SMSF, security anchor function (SAF), and/or security context management (SCM). Some or all of the functions of the AMF entity 103 may be supported in a single instance of one AMF entity.

The DN 110 means, for example, operator services, Internet access, or third-party services. The DN 110 transmits a downlink protocol data unit (PDU) to the UPF entity 104 or receives a PDU from the UPF entity 104 having been transmitted by the UE 101.

The PCF entity 106 receives information about packet flows from the application server and provides the function of determining policies for mobility management and session management. Specifically, the PCF entity 106 supports functions such as providing a unified policy framework for controlling network operations, providing policy rules so that control plane function entity(s) (e.g., AMF entity, SMF entity) may enforce policy rules, and implementing a front end for accessing relevant subscription information for policy decisions within the user data repository (UDR).

The SMF entity 105 provides session management functions, and if the UE 101 has multiple sessions, individual sessions may be managed by different SMF entities. Specifically, the SMF entity 105 supports functions, such as session management (e.g., session establishment, modification, and release, including maintaining a tunnel between the UPF entity 104 and the (R)AN node 102), UE IP address allocation and management (optionally including authentication), selection and control of UP functions, traffic steering settings for routing traffic to an appropriate destination in the UPF entity 104, termination of the interface toward policy control functions, enforcement of the control part of policies and QoS (quality of service), lawful interception of SM events and interfaces toward the LI system, termination of the SM part of the NAS message, downlink data notification, initiation of AN-specific SM information (delivery to the (R)AN 102 through N2 via the AMF entity 103), determination of SSC (session and service continuity) mode for a session, and roaming functionality. Some or all of the functions of the SMF entity 105 may be supported in a single instance of one SMF entity.

The UDM entity 109 stores user subscription data, policy data, or the like. The UDM entity 109 may include at least one of two parts, namely an application front end (FE) and a user data repository (UDR).

The FE may include a UDM FE responsible for location management, subscription management, and credential processing, and a PCF entity responsible for policy control. The UDR stores data required for the functions provided by the UDM-FE and policy profiles required by the PCF entity. The data stored in the UDR includes user subscription data including subscription identifiers, security credentials, access and mobility-related subscription data, and session-related subscription data, and policy data. The UDM-FE accesses subscription information stored in the UDR and supports functions such as authentication credential processing, user identification handling, access authentication, registration/mobility management, subscription management, and SMS management.

The UPF entity 104 transfers a downlink PDU received from the DN 110 via the (R)AN 102 to the UE 101, and transfers an uplink PDU received via the (R)AN 102 from the UE 101 to the DN 110. Specifically, the UPF entity 104 supports functions, such as anchor points for intra/inter RAT (radio access technology) mobility, external PDU session points for interconnection toward a data network, packet routing and forwarding, user plane part of packet inspection and policy rule enforcement, lawful interception, traffic usage reporting, uplink classifiers to support routing of traffic flows toward the data network, branching points to support multi-homed PDU sessions, QoS handling for the user plane (e.g., packet filtering, gating, uplink/downlink rate enforcement), uplink traffic verification (mapping between service data flow (SDF) and QoS flow), transport-level packet marking within uplink and downlink, downlink packet buffering, and downlink data notification triggering. Some or all of the functions of the UPF entity 104 may be supported in a single instance of one UPF.

The AF entity 107 interacts with the 3GPP core network to provide services (e.g., support for functions such as application impact on traffic routing, access to network capability exposure, and interaction with policy frameworks for policy control).

The (R)AN 102 collectively refers to a new radio access network that supports both evolved E-UTRA, which is an evolved version of 4G radio access technology, and new radio access technology (new radio, NR) (e.g., gNB).

The gNB supports functions, such as radio resource management (i.e., radio bearer control, radio admission control, connection mobility control, dynamic allocation of resources to UEs on uplink/downlink (i.e., scheduling)), IP (Internet protocol) header compression, encryption and integrity protection of user data streams, AMF selection upon UE attachment if routing toward the AMF is not determined from the information provided to the UE, routing user plane data to the UPF(s), routing control plane information to the AMF, connection setup and release, scheduling and transmission of paging messages (originating from the AMF), scheduling and transmission of system broadcast information (generated from the AMF or operation and maintenance (O&M)), measurement and measurement reporting configurations for mobility and scheduling, transport level packet marking in uplink, session management, support for network slicing, QoS flow management and mapping to data radio bearers, support for UEs in inactive mode, NAS message distribution, NAS node selection, wireless access network sharing, dual connectivity, and tight interworking between NR and E-UTRA.

The UE 101 means a user equipment. The user equipment may be referred to as a terminal, ME (mobile equipment), and MS (mobile station). In addition, the user equipment may be a portable device such as a laptop, mobile phone, PDA (personal digital assistant), smartphone, or multimedia device, or may be a non-portable device such as a PC (personal computer) or vehicle-mounted device.

The NEF 113 provides a means to securely expose services and capabilities provisioned by 3GPP network functions for third parties, internal exposure/reexposure, application functions, and edge computing. The NEF 113 receives information from other NF(s) (based on the exposed capabilities of other NF(s). The NEF 113 may store received information as structured data by using a standardized interface toward the data storage network function. The stored information may be reexposed to other NF and AF entities by the NEF entity 113 and used for other purposes such as analysis.

The NRF 115 supports service discovery. It receives an NF discovery request from one NF instance and provides information about the discovered NF instance to the requesting NF instance. It also maintains available NF instances and the services they support.

Meanwhile, FIG. 1A illustrates a reference model for the case where the UE 101 accesses one DN 110 by using a single PDU session for convenience of explanation, but the disclosure is not limited thereto.

The UE 101 may simultaneously access two or more (e.g., local and central) data networks by using multiple PDU sessions. Here, two or more SMFs may be selected for different PDU sessions. However, each SMF may have the capability to control both the local UPF and the central UPF in one PDU session.

Additionally, the UE 101 may simultaneously access two or more (i.e., local and central) data networks provisioned in a single PDU session.

In the 3GPP system, a conceptual link connecting NFs in a 5G system is defined as a reference point. For example, the reference point(s) included in the 5G system 100 of FIG. 1A are as follows.
- N1: Reference point between UE 101 and AMF 103
- N2: Reference point between (R)AN 102 and AMF 103
- N3: Reference point between (R)AN 102 and UPF 104
- N4: Reference point between SMF 105 and UPF 104
- N5: Reference point between PCF 106 and AF 107
- N6: Reference point between UPF 104 and DN 110
- N7: Reference point between SMF 105 and PCF 106
- N8: Reference point between UDM 109 and AMF 103
- N9: Reference point between two core UPFs 104
- N10: Reference point between UDM 109 and SMF 105
- N11: Reference point between AMF 103 and SMF 105
- N12: Reference point between AMF 103 and AUSF 108
- N13: Reference point between UDM 109 and AUSF 108
- N14: Reference point between two AMFs 103
- N15: Reference point between PCF and AMF in case of non-roaming scenario, reference point between PCF and AMF within the visited network in case of roaming scenario

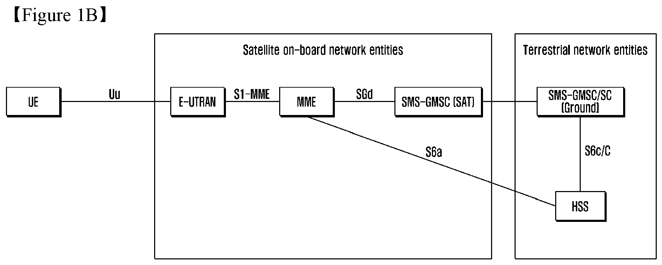

FIG. 1B is a diagram illustrating a network architecture and interfaces for supporting SMS services on a satellite utilizing a 4G system-based control plane according to an embodiment of the disclosure.

According to an embodiment of the disclosure, an MME and SMS-GMSC-ON or SMS-GMS-SAT may be located in a satellite as an EPC entity to support SMS services using the control plane, and a home subscriber server (HSS) and SMS-GMSC-T/SC or SMS-GMSC-Ground/SC may be located in a ground station to construct a network structure for supporting, on the satellite, SMS services using a 4G system-based control plane. When requesting an SMS service, the UE may request an 'SMS in MME' based service instead of an existing SMS service using the MSC-based control plane. If the MME in the satellite may support the function of supporting existing SMS services in the MSC in order to support 'SMS in MME', it may accept the corresponding service connection request. In addition, the SMS-GMS-SAT (or SMS-GMSC-ON) and SMS-GMSC-Ground (or SMS-GMSC-T) may be connected using the existing satellite. As described above, when the SMS-GMSC is located both in the satellite and the ground station, to support MT SMS services, the SMS-GMSC of the ground station may include information about the satellite's SMS-GMSC in the SendRoutingInfo for Short Msg transmission/reception message by which the SMS-GMSC of the ground station retrieves MT SMS delivery location information from the HSS.

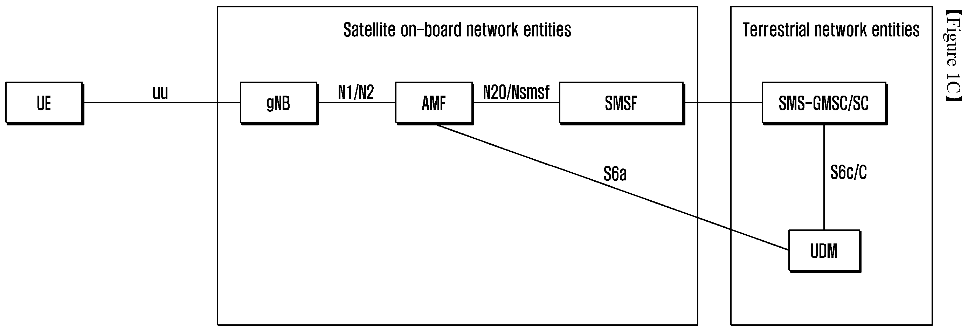

FIG. 1C is a diagram illustrating a network architecture and interfaces for supporting SMS services on a satellite utilizing a 5G system-based control plane according to an embodiment of the disclosure. According to an embodiment of the disclosure, an AMF and an SMSF may be located in the satellite as 5G NFs to support SMS services using the control plane, and an SMS-GMSC/SC and a UDM may be located at the ground station. To support the 'SMS over NAS' function requested by the UE upon service registration, the AMF may accept the corresponding service request if the SMSF is located in the satellite or in the ground station. According to an embodiment of the disclosure, the AMF may transfer an MO SMS message transmitted by the UE to the SMSF. Upon receiving an MO SMS message or an MT SMS message, the SMSF checks with the AMF whether the service link is connected between the UE and the satellite. If the service link is connected but the UE is in the CM-Idle state, the SMSF may perform a NAS connection operation via paging and then deliver the SMS-related message to the UE. If the feeder link between the UE and the ground station is not connected, the SMSF may receive the available reachability timer for servicelink information from the AMF and perform buffering for the corresponding amount of time, and then deliver the SMS-related message to the ground station.

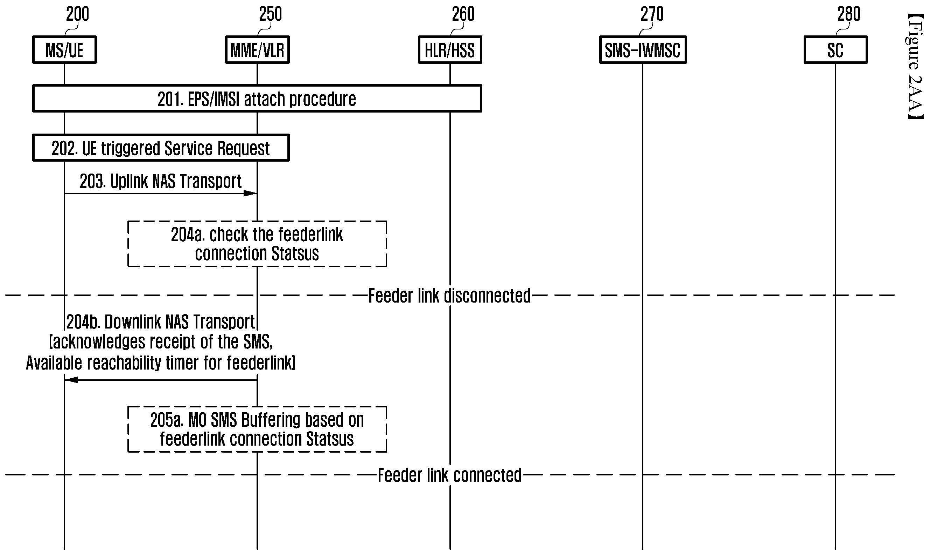

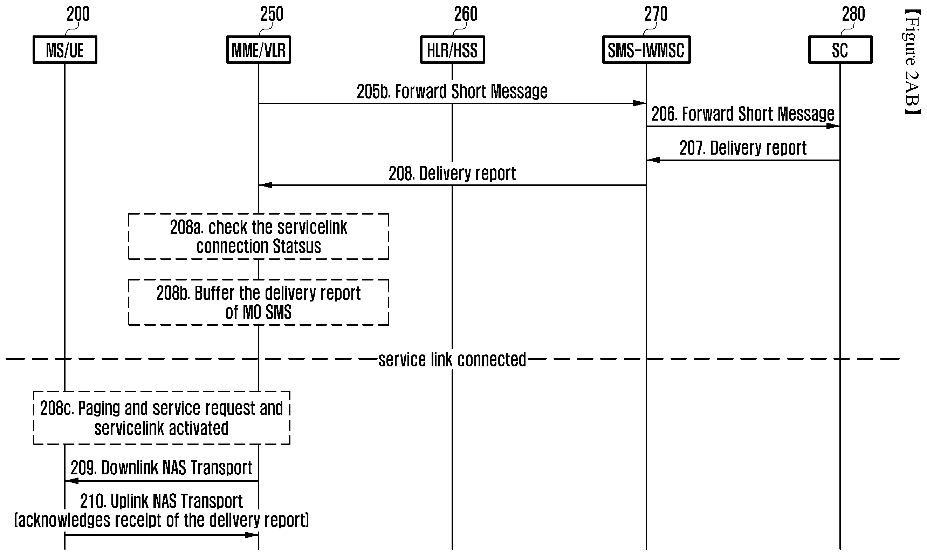

FIG. 2AA and FIG. 2AB are a sequence diagram for transmitting network structure and related information for supporting on a satellite an MO SMS service requested by a UE by utilizing a 4G system-based control plane according to an embodiment of the disclosure.

According to an embodiment of the disclosure, an MME may be located in a satellite as a 4G EPC entity to support SMS services utilizing the control plane, and an SMS-IWMSC/SMS-GMSC/SC and HSS may be located at a ground station.

At steps 201 and 202, if the UE 200 cannot find a connection to a ground enodeB, it may perform a network registration procedure and a service request procedure using the satellite's enodeB. The request for the corresponding operation may be made when the service link between the UE and the satellite is connected. Here, when the UE 200 proceeds with the network registration or service request procedure, it may request an 'SMS in MME' service, which is a control message-based SMS service using the UE's MME, instead of an existing control message-based SMS service using the MSC. In addition, the network may determine whether the corresponding operation is supported by the MME in the satellite and whether the 'SMS in MME' service is accepted. If the MME in the satellite supports the corresponding operation, the network may support the service requested by the UE.

At step 203, to use the SMS service, the UE 200 may include an MO SMS message in a UL NAS Transport message and transmit it to the MME 250.

At steps 204a and 204b, upon receiving the MO SMS message from the UE 200, the MME 250 may transmit the reception status of the MO SMS message to the UE 200 via the DL NAS Transport. If there is no feeder link connection between the satellite and the ground station, the DL NAS Transport may carry a Reception of MO SMS message indicating whether the MO SMS message has been received, and an available time for feederlink, which is information regarding the time when Delivery of MO SMS can be delivered from the SC. Upon receiving the available time for feederlink information, the UE may predict that Delivery of MO SMS is possible within the corresponding time and does not perform a retransmission operation of the MO SMS message before that time. If the UE fails to receive the Delivery of MO SMS message after the available time for feederlink, the UE may perform a retransmission operation of the MO SMS message. If the service link between the UE and the satellite is connected after a specific time has passed since the feederlink connection between the satellite and the ground station, the MME may set an additional offset of about 5 to 15 minutes for the available time for feederlink to notify the UE of the usable time for receiving Delivery of MO SMS.

If the feeder link between the UE and the satellite is not connected, at step 205a, buffering operation may be performed for a duration indicated by the available time for feederlink.

At step 205b, if the feeder link between the UE and the satellite is connected, the MME 250 may forward the MO SMS message received from the UE to the SMS-IWMSC 270 in the ground station. If the feeder link between the UE and the satellite is not connected, after performing a buffering operation for the available time for feederlink as in step 205a, the operation of forwarding the MO SMS message received from the UE to the SMS-IWMSC 270 in the ground station may be performed.

At step 206, after receiving the MO SMS message via the SMS-IWMSC 270, the SC 280 may generate a delivery report of MO SMS message indicating that the MO SMS message transmitted by the UE has been successfully delivered to the SC.

At step 207, the SMS-IWMSC 270 may receive the delivery report of MO SMS message from the SC 280.

At step 208, the SMS-IWMSC 270 may forward the delivery report of MO SMS message received from the SC 280 to the MME 250 in the satellite.

At step 208a, upon receiving the delivery report of MO SMS message, the MME 250 may check the information about the service link between the satellite and the UE.

At step 208b, if the service link between the satellite and the UE is not connected, the delivery report of MO SMS message may be buffered for the available time for servicelink.

At step 208c, if the service link between the satellite and the UE is connected but is in CM-IDLE state, paging and service request operations may be performed for connecting the UE to the control plane through the service link connection.

At step 209, the MME 250 may forward the delivery report of MO SMS message received from the SMS-IWMSC 270 to the UE 200 by use of a DL NAS Transport message.

At step 210, the UE 200 may transmit information acknowledging receipt of the delivery report, indicating that it has successfully received the delivery report of MO SMS message, to the satellite MME 250 via a UL NAS Transport message.

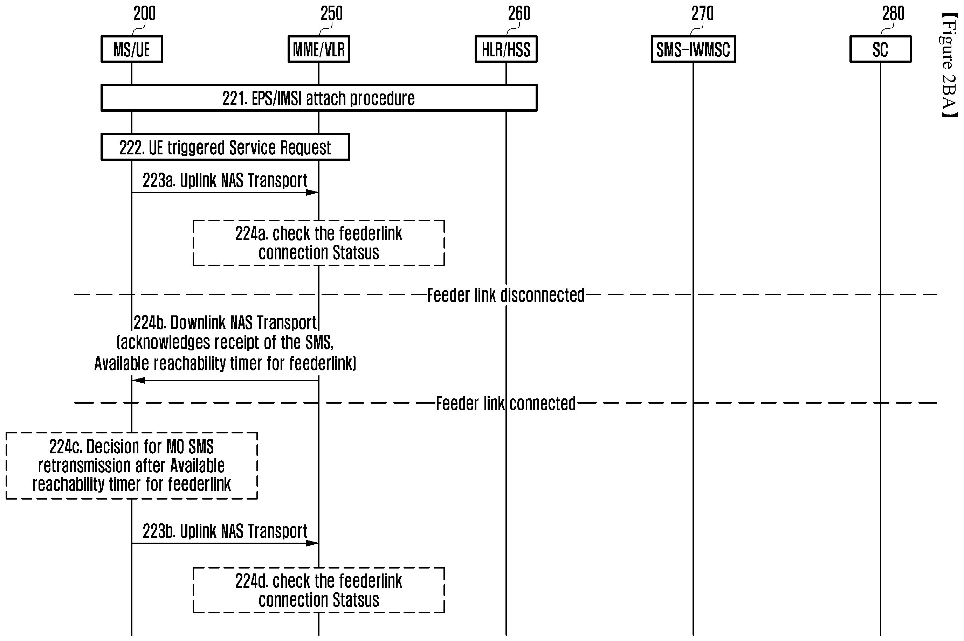

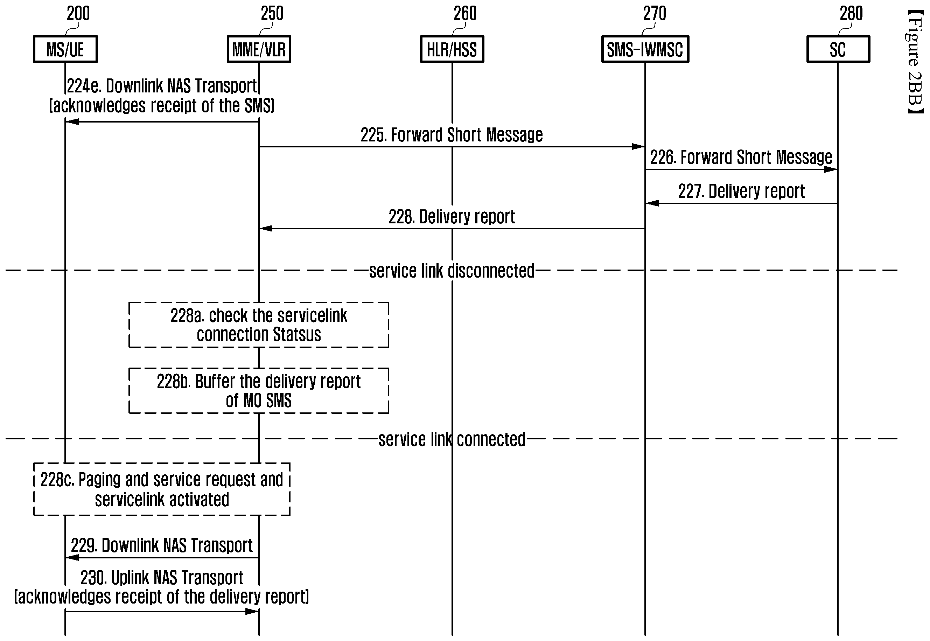

FIG. 2BA and FIG. 2BB are a sequence diagram for transmitting network structure and related information for supporting on a satellite an MO SMS service requested by a UE by utilizing a 4G system-based control plane according to an embodiment of the disclosure.

According to an embodiment of the disclosure, an MME may be located in a satellite as a 4G EPC entity to support SMS services utilizing the control plane, and an SMS-IWMSC/SMS-GMSC/SC and HSS may be located at a ground station.

At steps 221 and 222, if the UE 200 cannot find a connection to a ground enodeB, it may perform a network registration procedure and a service request procedure using the satellite's enodeB. Here, when the UE 200 proceeds with the network registration or service request procedure, it may request an 'SMS in MME' service, which is a control message-based SMS service using the UE's MME, instead of an existing control message-based SMS service using the MSC. In addition, the network may determine whether the corresponding operation is supported by the MME in the satellite and whether the 'SMS in MME' service is accepted. If the MME in the satellite supports the corresponding operation, the network may support the service requested by the UE.

At step 223a, to use the SMS service, the UE 200 may include an MO SMS message in a UL NAS Transport message and transmit it to the MME 250.

At steps 224a and 224b, upon receiving the MO SMS message from the UE 200, the MME 250 may transmit the reception status of the MO SMS message to the UE 200 via the DL NAS Transport. If there is no feeder link connection between the satellite and the ground station, the DL NAS Transport may carry a Reception of MO SMS message indicating whether the MO SMS message has been received, and an available time for feederlink, which is information regarding the time when Delivery of MO SMS can be delivered from the SC. Upon receiving the available time for feederlink information, the UE 200 may predict that Delivery of MO SMS is possible within the corresponding time and does not perform a retransmission operation of the MO SMS message before that time. If the UE fails to receive the Delivery of MO SMS message after the available time for feederlink, the UE may perform a retransmission operation of the MO SMS message. If the service link between the UE and the satellite is connected after a specific time has passed since the feederlink connection between the satellite and the ground station, the MME may set an additional offset of about 5 to 15 minutes for the available time for feederlink to notify the UE of the usable time for receiving Delivery of MO SMS.

At step 224c, if failing to receive the Delivery of the MO SMS message even after a specific time (available time for feederlink and additional offset) has passed, the UE 200 may determine to retransmit the MO SMS message.

At step 223b, to use the SMS service, the UE 200 may include the MO SMS message to be retransmitted in a UL NAS Transport message and transmit it to the MME 250.

At steps 224d and 224e, upon receiving the MO SMS message from the UE 200, the MME 250 may transmit the reception status of the MO SMS message to the UE 200 through DL NAS Transport.

At step 225, if the feeder link between the UE and the satellite is connected, the MME 250 may forward the MO SMS message received from the UE 200 to the SMS-IWMSC 270 in the ground station.

At step 226, after receiving the MO SMS message via the SMS-IWMSC 270, the SC 280 may generate a delivery report of MO SMS message indicating that the MO SMS message transmitted by the UE has been successfully delivered to the SC.

At step 227, the SMS-IWMSC 270 may receive the delivery report of MO SMS message from the SC 280.

At step 228, the SMS-IWMSC 270 may forward the delivery report of MO SMS message received from the SC 280 to the MME 250 in the satellite.

At step 228a, upon receiving the delivery report of MO SMS message, the MME 250 may check the information about the service link between the satellite and the UE.

At step 228b, if the service link between the satellite and the UE is not connected, the delivery report of MO SMS message may be buffered for the available time for servicelink.

At step 228c, if the service link between the satellite and the UE is connected but is in CM-IDLE state, paging and service request operations may be performed for connecting the UE to the control plane through the service link connection.

At step 229, the MME 250 may forward the delivery report of MO SMS message received from the SMS-IWMSC 270 to the UE 200 by use of a DL NAS Transport message.

At step 230, the UE 200 may transmit information acknowledging receipt of the delivery report, indicating that it has successfully received the delivery report of MO SMS message, to the satellite MME 250 via a UL NAS Transport message.

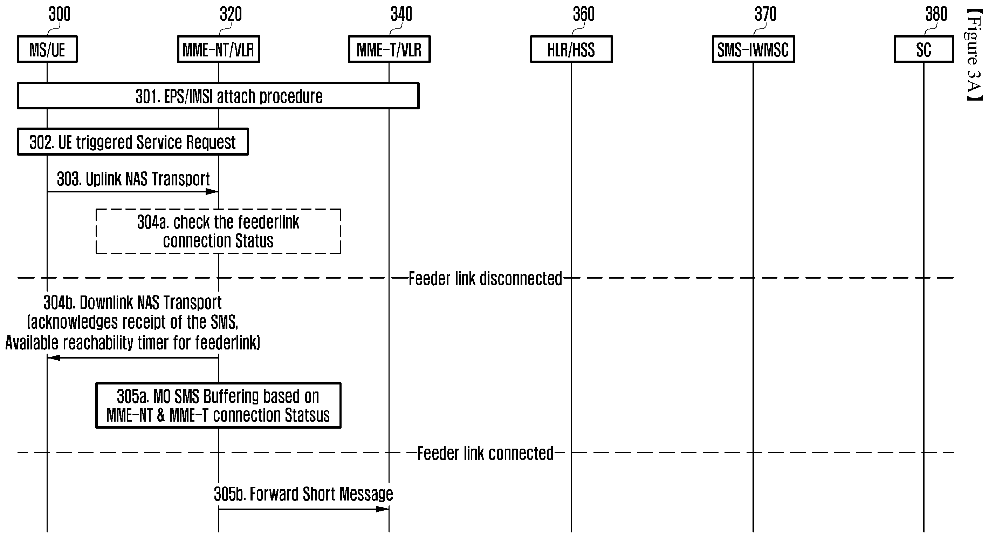

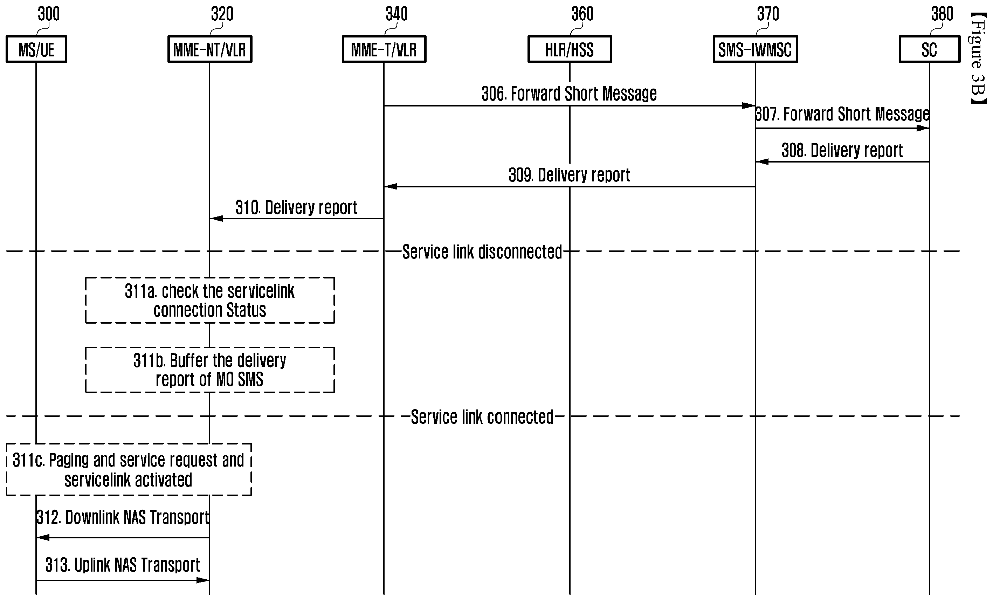

FIG. 3A and FIG. 3B are a sequence diagram for transmitting network structure and related information for supporting on a satellite an MO SMS service requested by a UE by utilizing a 4G system-based control plane according to an embodiment of the disclosure.

According to an embodiment of the disclosure, an MME-NT may be located in a satellite as a 4G EPC entity to support SMS services using the control plane, and an MME-T, SMS-IWMSC/SMS-GMSC/SC, and HSS may be located at a ground station. In the disclosure, the MME-NT may be used interchangeably with the MME-ON.

At steps 301 and 302, if the UE 300 cannot find a connection to a ground enodeB, it may perform a network registration procedure and a service request procedure using the satellite's enodeB. The request for the corresponding operation may be made when the service link between the UE and the satellite is connected. Here, when the UE proceeds with the network registration or service request procedure, it may request an 'SMS in MME' service, which is a control message-based SMS service using the UE's MME, instead of an existing control message-based SMS service using the MSC. In addition, the network may determine whether the corresponding operation is supported by the MME in the satellite and whether the 'SMS in MME' service is accepted. If the MME in the satellite supports the corresponding operation, the network may support the service requested by the UE.

At step 303, to use the SMS service, the UE 300 may include an MO SMS message in a UL NAS Transport message and transmit it to the MME-NT 320.

At steps 304a and 304b, upon receiving the MO SMS message from the UE 300, the MME-NT 320 may transmit the reception status of the MO SMS message to the UE 300 via the DL NAS Transport. If there is no feeder link connection between the satellite and the ground station, the DL NAS Transport may carry a Reception of MO SMS message indicating whether the MO SMS message has been received, and an available time for feederlink, which is information regarding the time when Delivery of MO SMS can be delivered from the SC. Upon receiving the available time for feederlink information, the UE 300 may predict that Delivery of MO SMS is possible within the corresponding time and does not perform a retransmission operation of the MO SMS message before that time. If the UE fails to receive the Delivery of MO SMS message after the available time for feederlink, the UE may perform a retransmission operation of the MO SMS message. If the service link between the UE and the satellite is connected after a specific time has passed since the feederlink connection between the satellite and the ground station, the MME-NT may set an additional offset of about 5 to 15 minutes for the available time for feederlink to notify the UE of the usable time for receiving Delivery of MO SMS.

At step 305a, based on the MME-NT connection status, the MME-NT 320 may perform MO SMS buffering operations.

At step 305b, if the feeder link between the UE and the satellite is connected, the MME-NT 320 may forward the MO SMS message received from the UE 300 to the MME-T 340 in the ground station. If the feeder link between the UE and the satellite is not connected, after performing a buffering operation for the available time for feederlink as in step 305a, the operation of forwarding the MO SMS message received from the UE to the MME-T 340 in the ground station may be performed.

At step 306, the MME-T 340 may forward the MO SMS message received from the MME-NT 320 to the SMS-IWMSC 370.

At step 307, after receiving the MO SMS message via the SMS-IWMSC 370, the SC 380 may generate a delivery report of MO SMS message indicating that the MO SMS message transmitted by the UE has been successfully delivered to the SC.

At step 308, the SMS-IWMSC 370 may receive a delivery report of MO SMS message from the SC 380.

At step 309, the SMS-IWMSC 370 may forward the delivery report of MO SMS message received from the SC 380 to the MME-T 340 in the ground station.

At step 310, the MME-T 340 may forward the delivery report of MO SMS message received from the SMS-IWMSC 370 to the MME-NT 320.

At step 311a, upon receiving the delivery report of MO SMS message, the MME-NT 320 may check the information about the service link between the satellite and the UE.

At step 311b, if the service link between the satellite and the UE is not connected, the delivery report of MO SMS message may be buffered for the available time for servicelink.

At step 311c, if the service link between the satellite and the UE is connected but is in CM-IDLE state, the MME-NT 320 may perform paging and service request operations for connecting the UE to the control plane through the service link connection.

At step 312, the MME-NT 320 may forward the delivery report of MO SMS message received from the SMS-IWMSC 370 to the UE 300 by use of a DL NAS Transport message.

At step 313, the UE 300 may transmit information acknowledging receipt of the delivery report, indicating that it has successfully received the delivery report of MO SMS message, to the MME-NT 320 in the satellite via a UL NAS Transport message.

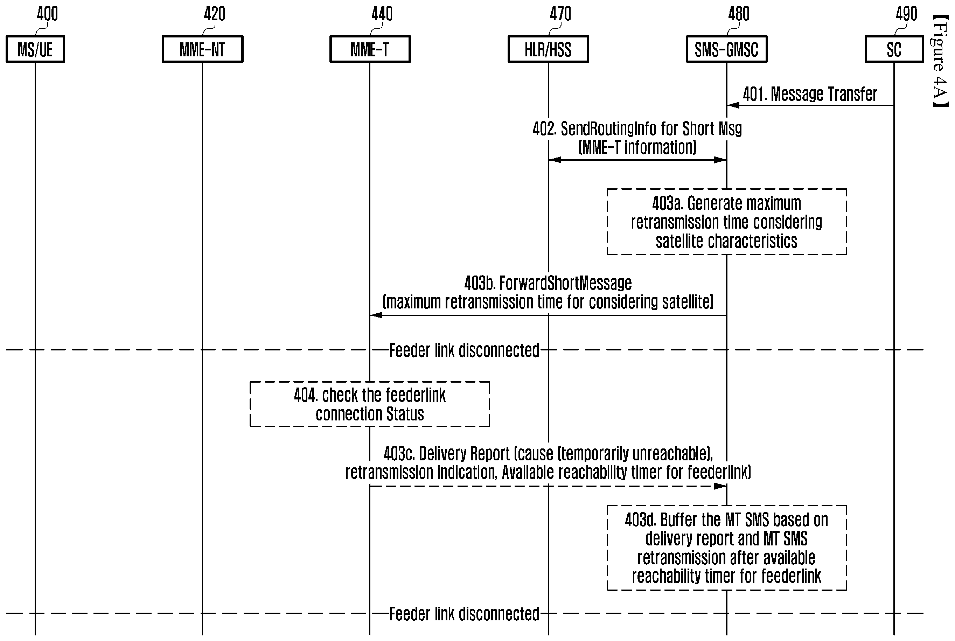

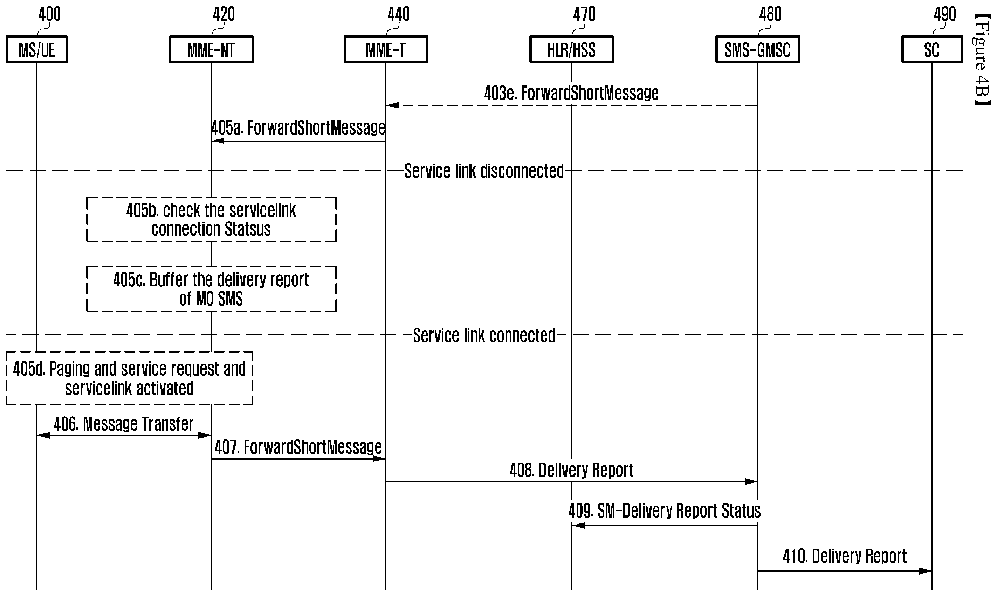

FIG. 4A and FIG. 4B are a sequence diagram for transmitting network structure and related information for supporting on a satellite an MT SMS service requested by the SC by utilizing a 4G system-based control plane according to an embodiment of the disclosure.

According to an embodiment of the disclosure, an MME-NT may be located in a satellite as a 4G EPC entity to support SMS services using the control plane, and an MME-T, SMS-IWMSC/SMS-GMSC/SC, and HSS may be located at a ground station. In the disclosure, the MME-T may be used interchangeably with the MME-G.

At step 401, to transmit an MT SMS, the SC 490 may transmit a Message transfer request message to the SMS-GMSC 480.

At step 402, upon receiving a request from the SC 490 for delivering an MT SMS to a specific user, the SMS-GMSC 480 may make a request for the address of the message server to which the user is registered to the HSS 470 for the delivery of the MT SMS message via a SendroutinginforMTSMS message. Based on IMSI information or the like in the request message, the HSS 470 may transmit the address of a 4G entity (e.g., IP address of MME-T) connected to the corresponding UE and capable of handling messages to the SMS-GSMC 480.

At step 403a, before delivery to the MME-T, the SMS-GMSC 480 may determine to generate maximum retransmission time information indicating that a retransmission function is supported for the MT SMS message if the MT SMS is not successfully delivered. In an embodiment of the disclosure, the SMS-GMSC 480 may also transmit maximum retransmission time information to the MME, indicating that the SMS-GMSC supports a retransmission function in the event that the delivery of MT SMS messages from the MME-T to the MME-NT is temporarily not possible. Here, the maximum retransmission time information generated by the SMS-GMSC may be set differently from existing SMS services by utilizing unavailable period information that takes into account the satellite's characteristics such as its orbital period.

At step 403b, the SMS-GMSC 480 may deliver the corresponding MT SMS message to the MME-T 440 in the ground station.

At step 404, the MME-T 440 may check whether the feeder link between the satellite and the ground station is connected. If the feeder link between the UE and the ground station is connected at step 404, steps 403c to 403e may be skipped.

At step 403c, if the feeder link between the UE and the satellite is not connected, the MME-T 440 may determine to transmit the SMS-GMSC 480 a delivery report related to the MT SMS message including cause information indicating that the connection with the satellite has been temporarily lost and available time for feederlink information indicating the time when the corresponding message should be retransmitted to the MME-T.

At step 403d, upon receiving the cause information indicating that the connection to the UE is temporarily unavailable and available timer for feederlink information from the MME-T 440, the SMS-GMSC 480 may store the MT SMS message in the SMS-GMSC for the available timer for feederlink or for a time shorter than the available time for feederlink, and determine to retransmit it to the MME-T after the specified time.

At step 403e, the SMS-GMSC 480 may transfer the stored MT-SMS information to the MME-T 440 to request forwarding of it to the MME-NT 420.

At step 405a, if the feeder link between the satellite and the ground station is connected, the MME-T 440 may forward the MT SMS message received from the SMS-GMSC 480 to the MME-NT 420 in the satellite.

At step 405b, upon receiving the MT SMS message, the MME-NT 420 may check information about the service link between the satellite and the UE.

At step 405c, if the service link between the satellite and the UE is not connected, the MME-NT 420 may buffer the MT SMS message for the available time for servicelink.

At step 405d, if the service link between the satellite and the UE is connected but is in CM-IDLE state, the MME-NT 420 may perform paging and service request operations for connecting the UE to the control plane through the service link connection.

At step 406, the MME-NT 420 may forward the MT SMS message received from the SMS-GMSC and MME-T to the UE 400 by use of a DL NAS Transport message. The UE 400 may transmit delivery report of MT SMS information indicating that it has successfully received the MT SMS message to the MME-NT 420 in the satellite by use of a UL NAS Transport message.

At step 407, upon receiving the delivery report of MT SMS information from the UE 400, the MME-NT 420 may forward the corresponding message to the MME-T 440.

At step 408, upon receiving the delivery report of MT SMS message, the MME-T 440 may forward it to the SMS-GMSC 480.

At steps 409 and 410, the SMS-GMSC 480 may forward the delivery report of MT SMS received from the MME-T 440 to the HSS 470 and the SC 490.

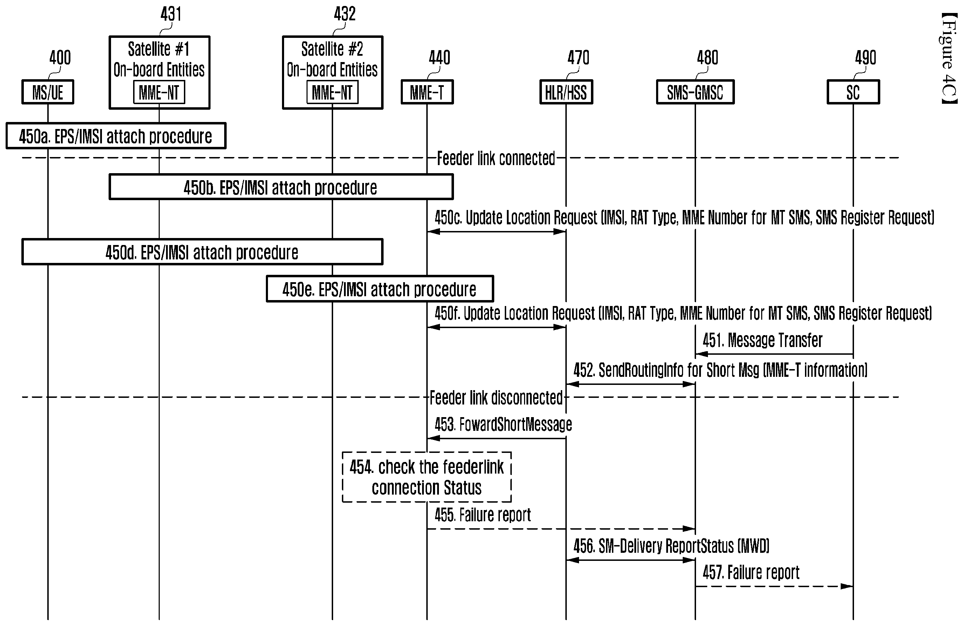

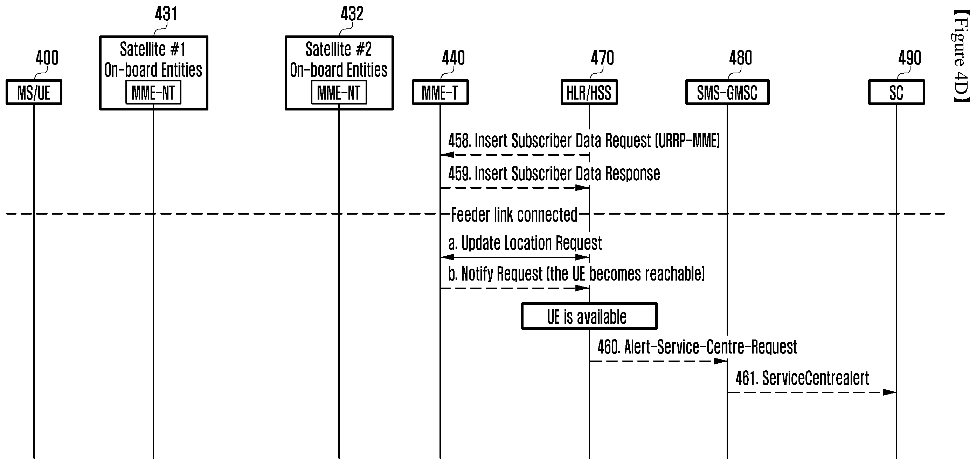

FIG. 4C and FIG. 4D are a sequence diagram for transmitting network structure and related information for supporting through multiple satellites an MT SMS service requested by the SC by utilizing a 4G system-based control plane according to an embodiment of the disclosure.

According to an embodiment of the disclosure, when using an MT-SMS service utilizing a satellite system composed of one or more satellites, each satellite may register a location update request message containing information such as a user registered on the satellite to the HSS prior to step 402 of FIGS. 4A and 4B. Through this, the SMS-GMSC having received an MT SMS message at step 401 from the SC may receive information about the satellite supporting the corresponding UE and information about the satellite on-board MME mapped to the corresponding satellite at step 402 from the HSS via a SendroutinginforMTSMS message.

According to an embodiment of the disclosure, if there is no feeder link connection between the satellite and the ground station, the MMT-T and SMS-GMSC may be unable to transfer the MT SMS message from the HSS to the message server address for MT SMS transmission. According to an embodiment of the disclosure, it may be assumed that there exists an entity managing the mobility of a satellite in a separate ground station according to the settings of the satellite network operator, and the MMT-T, as an entity managing the mobility of the corresponding satellite, may request and receive status information and connection status information of the satellite requesting a connection from the mobility-managing entity based on the address of the message server to which the MT SMS received from the HSS is to be delivered.

At step 450a, if the UE 400 cannot find a connection to a separate ground station (enodeB), it may perform a network registration procedure and a service request procedure by using the enode B of a satellite (satellite #1) that services the UE's location at a specific time T1. The request for the corresponding operation may be made when the service link between the UE and the satellite is connected. Here, when the UE proceeds with the network registration or service request procedure, it may request an 'SMS in MME' service, which is a control message-based SMS service using the UE's MME, instead of an existing control message-based SMS service using the MSC. In addition, the network may determine whether the corresponding operation is supported by the MME-NT in the satellite and whether the 'SMS in MME' service is accepted. If the MME in the satellite supports the corresponding operation, the network may support the service requested by the UE.

At step 450b, the MME-NT 431 in the satellite (satellite #1) may forward the network registration and service request message received from the UE 400 to the MME-T 440 in the ground station to thereby perform the network registration procedure and service request procedure.

At step 450c, the MMT-T 440 may transmit the HSS 470 a location update request message including information about the UE (UE#1) currently connected to the satellite (satellite #1). The location update request message may include satellite-related information such as a satellite ID, information on NFs in the satellite (MME ID etc.), IMSI, RAT type, MME number for MT SMS, and SMS register request information.

At step 450d, when time T2 has elapsed since the connection to the satellite (satellite #1), if the satellite (satellite #2) servicing the location of the UE at time T1+T2 changes, the UE may perform a network registration procedure and a service request procedure by using the enodeB of the new satellite (satellite #2). The request for the corresponding operation may be made when the service link between the UE and the satellite is connected.

At step 450e, the MME-NT 433 in the satellite (satellite #2) may forward the network registration and service request message received from the UE 400 to the MME-T 440 in the ground station to thereby perform the network registration procedure and service request procedure.

At step 450f, the MMT-T 440 may transmit the HSS 470 a location update request message including information such as the UE (UE#1) currently connected to the satellite (satellite #2). The location update request message may include satellite-related information such as a satellite ID, information on NFs in the satellite (MME ID etc.), IMSI, RAT Type, MME number for MT SMS, and SMS register request information.

At step 450f, when updated information supporting the UE (IMSI) (e.g., satellite-related information such as a new satellite ID and information on NFs in the satellite) is received, the HSS 470 may delete the information about the existing satellite (satellite #1) and may perform an update operation on the UE-related information based on the information included in the location update request message received from the new satellite (satellite #2). The HSS 470 may receive information (e.g., IP address) about the NF (MME or the like) in the satellite supporting the UE directly from the satellite, or receive a satellite ID or MME ID or the like from the satellite's MME, and obtain information (e.g., IP address) about the NF (MME or the like) in the satellite supporting the UE based on information provided by the satellite network operator, and store it in the HSS.

At step 451, the SC 490 may transmit an MT SMS message to the SMS-GMSC 480.

At step 452, the SMS-GMSC 480 may retrieve the address of the message server (MMT-NT) to which the MT SMS will be delivered from the HSS 470 by use of a SendroutinginforMTSMS message. Based on the IMSI information in the corresponding request message, the HSS may transfer the address (e.g., IP address) of the message server (MME-NT on-board/satellite) to which the UE is connected, to the SMS-GSMC 480.

At step 453, the SMS-GMSC 480 may forward the MME-T 440 the ShortMessage message containing the address (e.g., IP address) of the message server (MME-NT on-board/satellite) to which the UE is connected/registered, which has been received from the HSS 470.

At step 454, the MMT-T 440 may receive status information regarding the connection (feeder link) with the corresponding satellite from the entity managing the mobility of the corresponding satellite, based on the address of the message server to which the MT SMS is to be delivered received from the HSS, and the information about the corresponding satellite. If the satellite (satellite #1 or satellite #2) serving the UE and the ground station are connected (feeder link), the MMT-T may deliver the MT SMS message to the UE through the procedure from step 403e to step 410 of FIGS. 4A and 4B.

If the MMT-T checks the status information of the connection (feeder link) with the satellite obtained from the entity managing the mobility of the corresponding satellite at step 454 based on the address of the message server to which the MT SMS is to be delivered received from the HSS and the corresponding satellite information, and finds that there is no connection (feeder link) between the corresponding satellite and the ground station, the MMT-T may determine that the status is "UE is not available for MT SMS".

At step 455, the MME-T 440 may transmit a failure report message to the SMS-GMSC 480. The MME-T 440 may include error cause information (absent user or UE is not reachable) in the failure report message.

At step 456, if the SMS-GMSC 480 is unable to connect to the satellite indicated by the HSS 470 at step 454, the SMS-GMSC 480 may notify the HSS 470 that the MT-SMS message has not been delivered through the SM-Delivery ReportStatus operation. The SMS-GMSC 480 may transmit the HSS 470 a Report SM Delivery Status Request message that includes User Identifier, SM Delivery Outcome including error cause information (absent user or UE is not reachable), and SC address (service center address).

At step 457, the SMS-GMSC 480 may notify the SC 490 that the delivery of the specific user's MT SMS message has failed through a Failure Report operation.

At steps 445 and 459, the HSS 470 may transmit an Insert Subscriber Data Request message containing a URRP-MME flag to the MME-T 440 for a subscription request to notify the HSS of the event when the UE's status information changes.

In the case of the MME-T not supporting the URRP-MME flag, that is, the URRP-MME function, after completing the network registration and service request procedure based on the information for network registration and service request forwarded by the MME-NT 431 or 432 in each satellite as in step 450b or 450e, the MMT-T 440 may transmit an Update Location Request (a), which includes information regarding the satellite to which the UE is currently registered and SMS-related information, to the HSS 470 to notify whether the UE is reachable.

In the case of the MME-T supporting the URRP-MME flag, that is, the URRP-MME function, depending on the policy of the network operator or service provider, the MME-T may notify the HSS 470 whether the UE is reachable (the UE becomes reachable) through a Notify Request message (b).

If the HSS 470 receives information indicating that the delivery of the MT SMS to be transmitted to the UE (UE#1) registered with the satellite in steps 454 to 456 has failed, it may store the corresponding reporting information in the message waiting data (MWD).

At step 460, upon receiving information indicating that the corresponding UE (UE#1) has been (re)registered to a specific satellite from the MME-T 440 via (a) or (b), the HSS 470 may notify the SMS-GMSC 480 that the corresponding UE (UE#1) becomes reachable via the Alert-Service-Centre-Request operation.

At step 461, upon receiving a notification that UE#1 is connected, the SMS-GMSC 480 may forward this to the SC 490 to request a retransmission operation of the pending MT SMS message related to UE#1. Thereafter, operations for MT SMS delivery to UE #1 utilizing a satellite may be performed through steps 401 to 410 of FIGS. 4A and 4B.

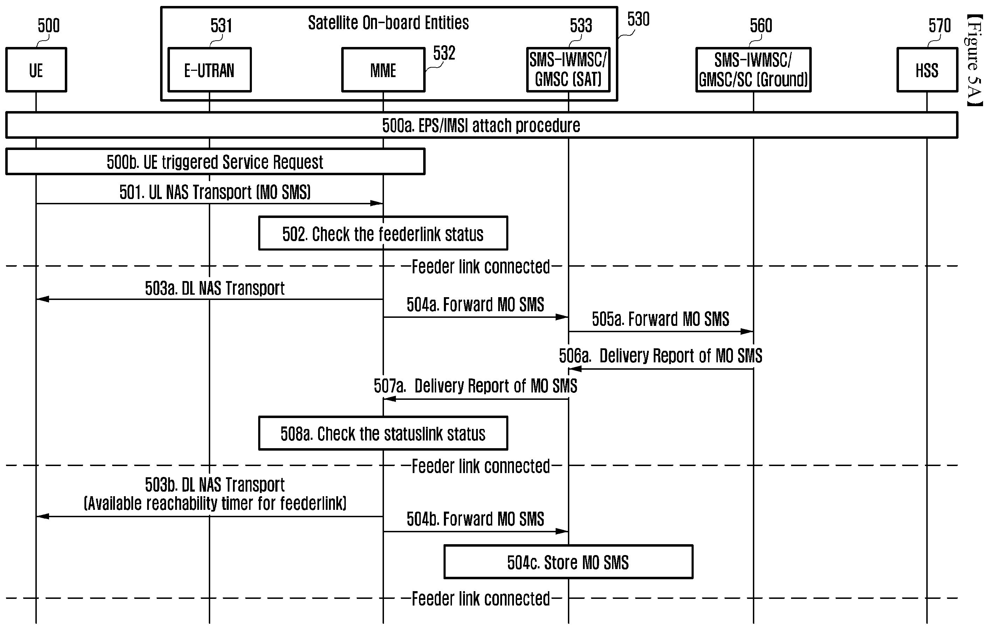

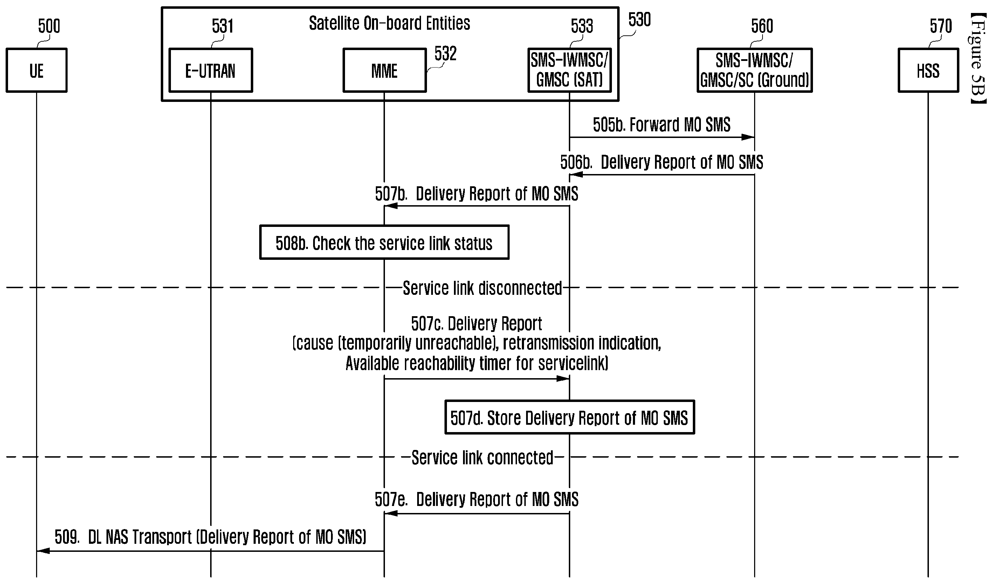

FIG. 5A and FIG. 5B are a sequence diagram for transmitting network structure and related information for supporting on a satellite an MO SMS service requested by a UE by utilizing a 4G system-based control plane according to an embodiment of the disclosure.

According to an embodiment of the disclosure, an MME and SMS-IWMSC-On/SMS-GMSC-On may be located in a satellite as 4G EPC entities to support SMS services using the control plane, and an SMS-IWMSC-Ground/SMS-GMSC-Ground/SC and HSS may be located at a ground station.

At step 500a or 500b, if the UE 500 cannot find a connection to a ground enodeB, it may perform a network registration procedure and a service request procedure using the satellite's enodeB. The request for the corresponding operation may be made when the service link between the UE and the satellite is connected. Here, when the UE proceeds with the network registration or service request procedure, it may request an 'SMS in MME' service, which is a control message-based SMS service using the UE's MME, instead of an existing control message-based SMS service using the MSC. In addition, the network may determine whether the corresponding operation is supported by the MME in the satellite and whether the 'SMS in MME' service is accepted. If the MME in the satellite supports the corresponding operation, the network may support the service requested by the UE.

At step 501, to use the SMS service, the UE 500 may include an MO SMS message in a UL NAS Transport message and transmit it to the MME 532.

At steps 502, 503a and 503b, upon receiving the MO SMS message from the UE 500, the MME 532 may transmit the reception status of the MO SMS message to the UE 500 via the DL NAS Transport. If there is no feeder link connection between the satellite and the ground station, the DL NAS Transport may carry a Reception of MO SMS message indicating whether the MO SMS message has been received, and an available time for feederlink, which is information regarding the time when Delivery of MO SMS can be delivered from the SC. Upon receiving the available time for feederlink information, the UE 500 may predict that Delivery of MO SMS is possible within the corresponding time and does not perform a retransmission operation of the MO SMS message before that time. If the UE fails to receive the Delivery of MO SMS message after the available time for feederlink, the UE may perform a retransmission operation of the MO SMS message. If the service link between the UE and the satellite is connected after a specific time has passed since the feederlink connection between the satellite and the ground station, the MME 532 may set an additional offset of about 5 to 15 minutes for the available time for feederlink to notify the UE of the usable time for receiving Delivery of MO SMS.

At step 504a, the MME 532 may forward the MO SMS message received from the UE 500 to the SMS-IWMSC-SAT 533 to request forwarding of the MO SMS message to the SMS-IWMSC-Ground 560 in the ground station.

At step 505a, if the SMS-IWMSC-SAT 533 has received the MO SMS message only without separate available time for feederlink information from the MME 532, the SMS-IWMSC-SAT 533 may assume that the feeder link between the satellite and the ground station is connected and forward the MO SMS message to the SMS-IWMSC-Ground and SC 560 in the ground station.

At step 506a, upon receiving the MO SMS message, the SMS-IWMSC-Ground and the SC 560 may transmit the SMS-IWMSC-SAT 533 a delivery report of MO SMS message indicating that the MO SMS message transmitted by the UE has been successfully delivered to the SMS-IWMSC-Ground and SC 560.

At step 507a, the SMS-IWMSC-SAT 533 may forward the delivery report of MO SMS message received from the SMS-IWMSC-Ground and SC 560 to the MME 532.

At step 508a, the MME 532 may check the information about the service link between the satellite and the UE.

At step 509, if the service link between the satellite and the UE is connected, the MME 532 may deliver the delivery report of MO SMS message received from the SMS-IWMSC-SAT 533 to the UE 500 via a DL NAS Transport message.

If the feeder link between the UE and the satellite is not connected when the MME 532 checks the feeder link status, it may transmit both the MO SMS message and the available time for feederlink together to the SMS-IWMSC-SAT 533 so as to request a buffering operation for retransmitting the MO SMS message after the available time for feederlink.

At steps 504b and 504c, upon receiving both the available time for feederlink information and the MO SMS from the MME 532, the SMS-IWMSC-ON or SMS-IWMSC-SAT 533 may buffer the MO SMS message for the available time for feederlink.

At step 505b, after the available time for feederlink, the SMS-IWMSC-SAT 533 may check the feeder link connection between the satellite and the ground station and then transfer the MO SMS message to the SMS-IWMSC-Ground 560.

At step 506b, upon receiving the MO SMS message, the SMS-IWMSC-Ground and SC 560 may transmit the SMS-IWMSC-SAT 533 a delivery report of MO SMS message indicating that the MO SMS message transmitted by the UE has been successfully delivered to the SMS-IWMSC-Ground and SC 560.

At step 507b, the SMS-IWMSC-SAT 533 may forward the delivery report of MO SMS message received from the SMS-IWMSC-Ground and SC 560 to the MME 532.

At step 508b, the MME 532 may check the information about the service link between the satellite and the UE.

At step 507c, if the service link between the satellite and the UE is not connected, the MME 532 may transmit the SMS-IWMSC-SAT 533 a delivery report related to the delivery report of MO SMS message including cause information indicating that the connection with the UE has been temporarily lost and available time for servicelink information indicating the time when the corresponding message should be retransmitted to the MME.

At steps 507d and 507e, upon receiving the cause information indicating that the connection to the UE is temporarily unavailable and available timer for serivcelink information from the MME 532, the IWMSC-SAT 533 may store the delivery report of MO SMS message in the IWMSC-SAT for the available timer for servicelink or for a time shorter than available time for servicelink, and retransmit it to the MME 532 after the specified time.

At step 509, after the service link between the satellite and the UE is connected, the MME 532 may deliver the delivery report of MO SMS message retransmitted by the SMS-IWMSC-SAT 533 to the UE 500 via a DL NAS Transport message.

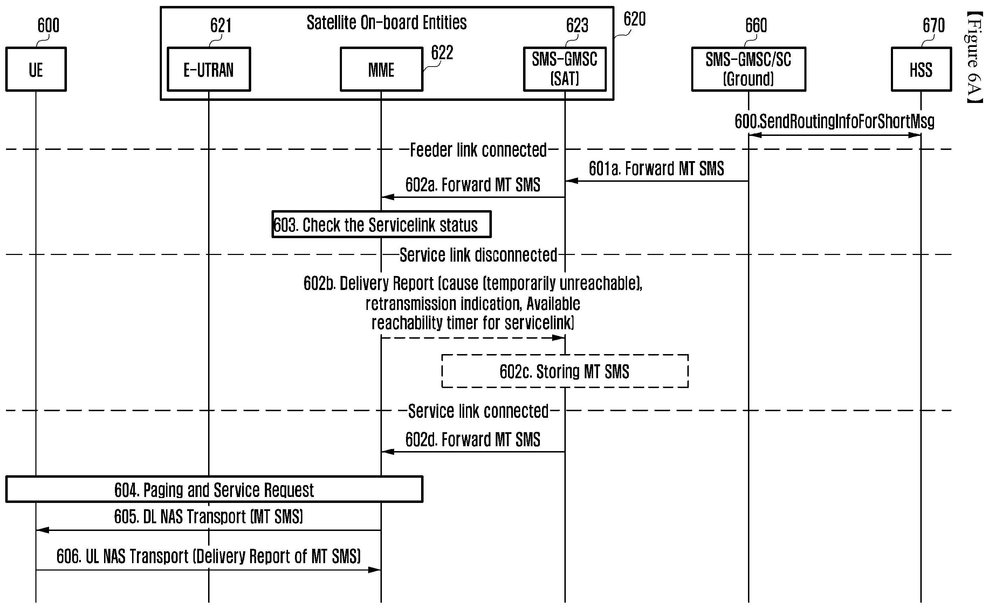

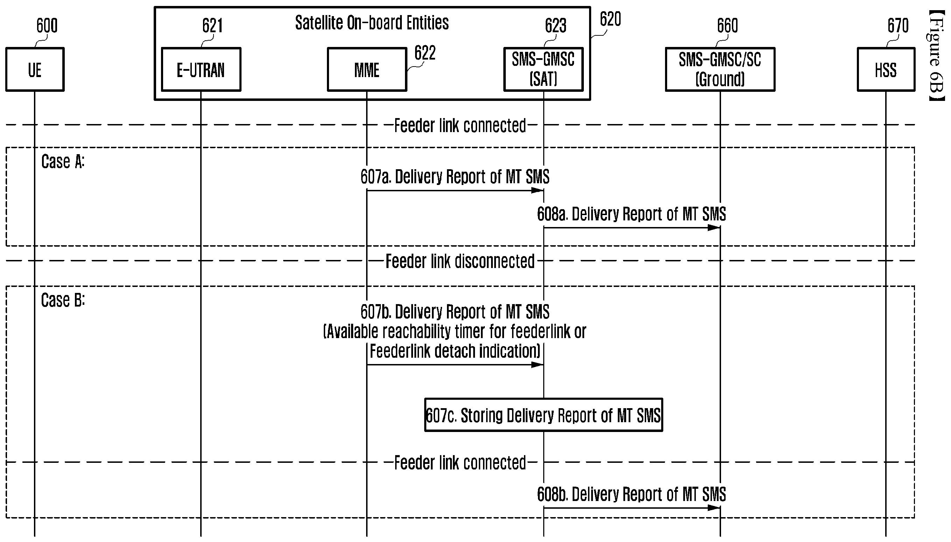

FIG. 6A and FIG. 6B are a sequence diagram for transmitting network structure and related information for supporting on a satellite an MT SMS service requested by the SC by utilizing a 4G system-based control plane according to an embodiment of the disclosure.

At step 600, the SC may transmit an MT SMS message to the SMS-GMSC. The SMS-GMSC 660 may request the address of the message server to which the corresponding MT SMS is to be delivered from the HSS 670 by use of a SendroutinginforMTSMS message. Based on IMSI information or the like in the request message, the HSS 670 may transmit the SMS-GSMC 660 the address (e.g., IP address) of the message server (MME, MSC, or SMS-GMSC on-board/Satellite) to which the corresponding UE is connected.

If there is no feeder link connection between the satellite and the ground station, the SMS-GMSC may be unable to receive the message server address to which the MT SMS is to be delivered from the HSS. According to an embodiment of the disclosure, it may be assumed that, according to the settings of the satellite network operator, there exists an entity managing the mobility of a satellite in a separate ground station, and that the HSS possesses satellite status information and connection status information registered in the entity managing the mobility of the corresponding satellite. If the HSS possesses satellite status information and connection status information received from the entity managing satellite mobility as described above, as a response message to a message server address request message received from the SMS-GMSC when the feeder link is not connected, the HSS may transmit the SMS-GMSC a SendroutinginforMTSMS message or informServiceCentre (informSC) message including available time for feederlink information and cause information indicating that the satellite cannot be temporarily connected (e.g., cause (temporarily unreachable)).

According to an embodiment of the disclosure, upon receiving information indicating that the connection is temporarily unavailable from the HSS, the SMS-GMSC may determine the buffering operation of the MT SMS message based on the available time for feederlink information. After the available time for feederlink received via the HSS, the SMS-GMSC may request the message server address for delivering the buffered MT SMS message by use of a SendroutinginforMTSMS message. Upon receiving the message server address to which the MT SMS message is to be delivered from the HSS, the SMS-GMSC may determine to forward it to the SMS-GMSC in the satellite.

According to an embodiment of the disclosure, depending on the policies and settings of the network operator, when receiving an informServiceCentre (informSC) message containing information indicating that the connection is temporarily unavailable from the HSS, the SMS-GMSC may generate a failure report message indicating that the feeder link connection is temporarily unavailable based on the informSC information and transmit it to the SC. The failure report message transmitted from the SMS-GMSC to the SC may include the available time for feederlink information received from the HSS. Upon receiving the failure report message from the SMS-GMSC, the SC may set the time for retransmitting the MT SMS to the SMS-GMSC to be after the available time for feederlink based on the available time for feederlink information in the failure report message. The SC may retransmit the MT SMS message to the SMS-GMSC after the available time for feederlink.

At step 601a, the SMS-GSMC-T 660 on the ground may receive the address of the message server to which the user wishing to receive the MT SMS is connected from the HSS 670 via step 600. According to an embodiment of the disclosure, when the corresponding user is connected to the network via a satellite, the corresponding message server may be located in the satellite. If SMS service request information is included according to the service-related information requested by the UE at the time when network registration of the UE via a satellite, the HSS may store the address of the message server that supports SMS services for the UE via the satellite. If the structures of the SMS-GSMC are located respectively on the ground and the satellite as shown in FIGS. 6A and 6B, the SMS-GMSC-T may receive the address of the SMS-GMSC-ON on the satellite from the HSS. Thereafter, when the feeder link between the ground station and the satellite is connected, the SMS-GMSC-T may transmit the MT SMS message to the SMS-GMSC-On 623 in the satellite via a satellite channel. If the feeder link between the satellite to which the corresponding UE is connected and the ground station is not connected, the SMS-GMSC-T 660 may store the MT SMS message and may deliver the MT SMS message to the SMS-GMSC-On 623 on the satellite when the feeder link is connected. If an MME-T managing mobility with the satellite is present in the ground station, to receive information regarding whether the feeder link is connected, the SMS-GMSC-T 660 may transmit the MMT-T information requesting information on whether the feeder link is connected, or if a service in the form of OAM is provided separately in the ground station for management between the satellite and the ground control center, the SMS-GMSC-T 660 may make a request to receive the corresponding information.

At step 601a, if the feeder link is connected, the SMS-GMSC-Ground 660 may forward the MT SMS message to the SMS-GMSC-SAT 623 in the satellite.

At step 602a, the SMS-GMSC-SAT 623 may forward the corresponding MT SMS message to the MME 622 in the satellite. The MME 622 in the satellite may be assumed to be an MME that provides MSC functions to support the 'SMS in MME' service. In an embodiment of the disclosure, the SMS-GMSC-SAT may also transmit maximum retransmission time information to the MME, which indicate that the SMS-GMSC-SAT supports a retransmission function in the event that delivery of the MT SMS message from the MME to the UE is temporarily unavailable. Here, the maximum retransmission time information transmitted from the SMS-GMSC-SAT to the MME may be set differently from existing SMS services by utilizing unavailable period information that takes into account the satellite's characteristics such as its orbital period.

At step 603, the MME 623 may check whether the service link between the satellite and the UE is connected. If the service link between the UE and the satellite is connected and is in ECM/RRC Connected state at step 603, step 604 may be skipped.

At step 604, if the service link between the UE and the satellite is connected but is in ECM/RRC Idle state, the MME may perform paging and service request operations to thereby transition the link between the UE and the satellite to ECM/RRC Connected state.

At step 602b, if the service link between the UE and the satellite is not connected at step 603, the MME 622 may transmit the SMS-IWMSC-SAT 623 a delivery report related to the MT SMS message, which includes both cause information indicating that the connection with the UE has been temporarily lost and available time for servicelink information indicating the time to make a retransmission request for the corresponding message to the MME.

At step 602c, upon receiving the cause information indicating that the connection to the UE is temporarily unavailable and available timer for serivcelink information from the MME 622, the SMS-GMSC-SAT 623 may store the MT SMS message in the SMS-GMSC-SAT 623 for the available timer for servicelink or for a time shorter than available time for servicelink, and determine to retransmit it to the MME 622 after the specified time.

At step 602d, the SMS-GMSC-SAT 623 may transmit the stored MT SMS information to the MME 622 and request that the MT SMS information be transferred to the UE 600.

At step 605, if the service link between the satellite and the UE is connected and is in CM-Connected state, the MME 622 may forward the MT SMS message received from the SMS-GMSC-On 623 to the UE 600 by use of a DL NAS Transport message.

At step 606, the UE 600 may transmit the MME 622 a UL NAS Transport containing a delivery report of MT SMS message indicating that the MT SMS message has been delivered.

The MME having received the delivery report of MT SMS from the UE prior to step 607a or step 607b may check whether the feeder link between the satellite and the ground station is connected.

At step 607a, if the feeder link between the satellite and the base station is connected, the MME 622 may forward the corresponding message to the SMS-GMSC-SAT 623.

At step 608a, the SMS-GMSC-SAT 623 may forward the delivery report of MT SMS received from the MME 622 to the SMS-GMSC-Ground and SC 660.

At step 607b, if the feeder link between the satellite and the ground station is not connected, the MME 623 may transmit the delivery report of MT SMS information plus the available timer for feederlink information together to the SMS-GMSC-SAT 623.

At step 607c, upon receiving the delivery report of MT SMS information plus the available timer for feederlink information from the MME 622, the SMS-GMSC-SAT 623 may store the delivery report of MT SMS information in the SMS-GMSC-SAT for the available timer for feederlink or a time shorter than the available time for feederlink, and then deliver the delivery report of MT SMS to the SMS-GMSC-Ground and SC 660 after the specified time.

At step 608b, after the available timer for feederlink or a time shorter than the available time for feederlink received from the MME 622, the SMS-GMSC-SAT 623 may request the connection status of the feeder link from the MME, check the connection status of the feeder link, and then forward the delivery report of MT SMS to the SMS-GMSC-Ground and SC 660, which completes the operation of delivering the MT SMS message to the requested UE connected to the satellite.

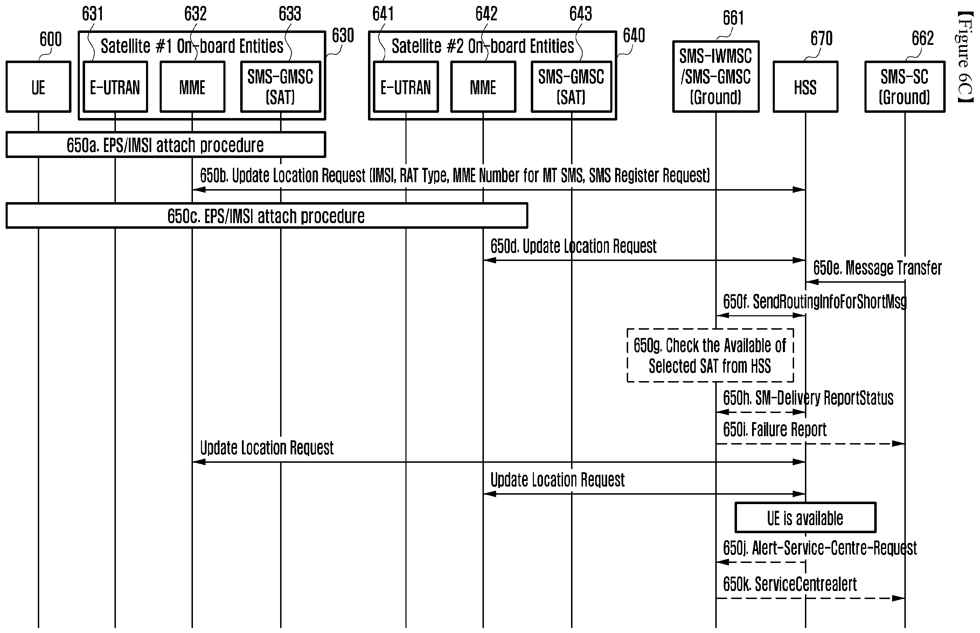

FIG. 6C is a sequence diagram for transmitting network structure and related information for supporting through multiple satellites an MT SMS service requested by the SC by utilizing a 4G system-based control plane according to an embodiment of the disclosure.

According to an embodiment of the disclosure, when using an MT-SMS service utilizing a satellite system composed of one or more satellites, each satellite may register a location update request message containing information such as a user registered on the satellite to the HSS prior to step 600 of FIGS. 6A and 6B. Through this, the SMS-GMSC having received an MT SMS message at step 600 from the SC may receive information about the satellite supporting the corresponding UE and information about the satellite on-board MME and SMS-GMSC mapped to the corresponding satellite from the HSS via a SendroutinginforMTSMS message.

According to an embodiment of the disclosure, if there is no feeder link connection between the satellite and the ground station, the SMS-GMSC may be unable to transfer the MT SMS message from the HSS to the message server address for MT SMS transmission. According to an embodiment of the disclosure, it may be assumed that there exists an entity managing the mobility of a satellite in a separate ground station according to the settings of the satellite network operator, and the SMS-GMSC, as an entity managing the mobility of the corresponding satellite, may request and receive status information and connection status information of the satellite requesting a connection from the mobility-managing entity based on the address of the message server to which the MT SMS received from the HSS is to be delivered.

At step 650a, if the UE 600 cannot find a connection to a separate ground station (enodeB), it may perform a network registration procedure and a service request procedure by using the enode B of a satellite (satellite #1) that services the UE's location at a specific time T1. The request for the corresponding operation may be made when the service link between the UE and the satellite is connected. Here, when the UE proceeds with the network registration or service request procedure, it may request an 'SMS in MME' service, which is a control message-based SMS service using the UE's MME, instead of an existing control message-based SMS service using the MSC. In addition, the network may determine whether the corresponding operation is supported by the MME in the satellite and whether the 'SMS in MME' service is accepted. If the MME in the satellite supports the corresponding operation, the network may support the service requested by the UE.

At step 650b, the MMT 632 in the satellite (satellite #1) may transmit the HSS 670 a location update request message including information about the UE in the ground station and currently connected to the satellite. The location update request message may include satellite-related information such as a satellite ID, information on NFs in the satellite (MME ID, SMS-GMSC etc.), IMSI, RAT type, MME number for MT SMS, and SMS register request information.

At step 650c, when time T2 has elapsed since the connection to the satellite (satellite #1), if the satellite (satellite #2) servicing the location of the UE at time T1+T2 changes, the UE may perform a network registration procedure and a service request procedure by using the enodeB of the new satellite (satellite #2). The request for the corresponding operation may be made when the service link between the UE and the satellite is connected.

At step 650d, the MMT 642 in the satellite (satellite #2) may transmit the HSS 670 a location update request message including information such as the UE in the ground station and currently connected to the satellite. The location update request message may include satellite-related information such as a satellite ID, information on NFs in the satellite (MME ID, SMS-GMSC etc.), IMSI, RAT type, MME number for MT SMS, and SMS register request information.

At step 650d, when updated information supporting the UE (IMSI) (e.g., satellite-related information such as a new satellite ID and information on NFs in the satellite) is received, the HSS may delete the information about the existing satellite (satellite #1) and may perform an update operation on the UE-related information based on the information included in the location update request message received from the new satellite (satellite #2). The HSS may receive information (e.g., IP address) about the NF (MME, SMS-GMSC or the like) in the satellite supporting the UE directly from the satellite, or receive a satellite ID or MME ID or the like from the satellite's MME, and obtain information (e.g., IP address) about the NF (MME, SMS-GMSC or the like) in the satellite supporting the UE based on information provided by the satellite network operator, and store it in the HSS.

At step 650e, the SC 662 may transmit an MT SMS message to the SMS-GMSC 661.

At step 650f, the SMS-GMSC 661 may request the address of the message server to which the corresponding MT SMS will be delivered from the HSS 670 by use of a SendroutinginforMTSMS message. Based on the IMSI information in the corresponding request message, the HSS 670 may transfer the address (e.g., IP address) of the message server (MME, MSC, or SMS-GMSC on-board/satellite) to which the corresponding UE is connected, to the SMS-GSMC 661.

At step 650g, the SMS-GMSC 661 may receive status information regarding the connection (feeder link) with the corresponding satellite from the entity managing the mobility of the corresponding satellite, based on the address of the message server to which the MT SMS is to be delivered received from the HSS, and the information about the corresponding satellite. If the satellite (satellite #1 or satellite #2) serving the UE and the ground station are connected (feeder link), the SMS-GMSC may deliver the MT SMS message to the UE through the procedure from step 601 to step 608b of FIGS. 6A and 6B.

If the SMS-GMSC 661 checks the status information of the connection (feeder link) with the corresponding satellite at step 650g based on the entity managing the mobility of the corresponding satellite, the address of the message server to which the MT SMS is to be delivered received from the HSS, and the corresponding satellite information, and finds that there is no connection (feeder link) between the corresponding satellite and the ground station, the SMS-GMSC may determine that the status is "UE is not available for MT SMS".

At step 650h, if the SMS-GMSC 661 is unable to connect to the satellite indicated by the HSS 670 at step 650g, the SMS-GMSC 661 may notify the HSS 670 that the MT SMS message has not been delivered through the SM-Delivery ReportStatus operation. The SMS-GMSC 661 may transmit the HSS 670 a Report SM Delivery Status Request message that includes User Identifier, SM Delivery Outcome including error cause information (absent user or UE is not reachable), and SC address (service center address).

At step 650i, the SMS-GMSC 661 may notify the SC 662 that the delivery of the specific user's MT SMS message has failed through a Failure Report operation.

At step 650j, when a specific UE (UE#1) performs network registration and service request procedure through a satellite as in steps 650a to 650d, the MME may receive information about the satellite to which the corresponding UE (UE#1) is connected from the HSS via a location update request message. If the HSS 670 receives information indicating that the delivery of the MT SMS to be transmitted to the UE (UE#1) registered with the satellite in steps 650g and 650h has failed, it may store the corresponding reporting information in the message waiting data (MWD). Thereafter, when the HSS receives information indicating that the corresponding UE (UE#1) has been (re)registered to a specific satellite, it may notify the SMS-GMSC 661 that the corresponding UE (UE#1) is connected through the Alert-Service-Centre-Request operation.

At step 650k, upon receiving a notification that UE#1 is connected, the SMS-GMSC 661 may forward this to the SC 662 to request a retransmission operation of the pending MT SMS message related to UE#1. Thereafter, operations for MT SMS delivery to UE #1 utilizing a satellite may be performed through steps 600 to 608b of FIGS. 6A and 6B.

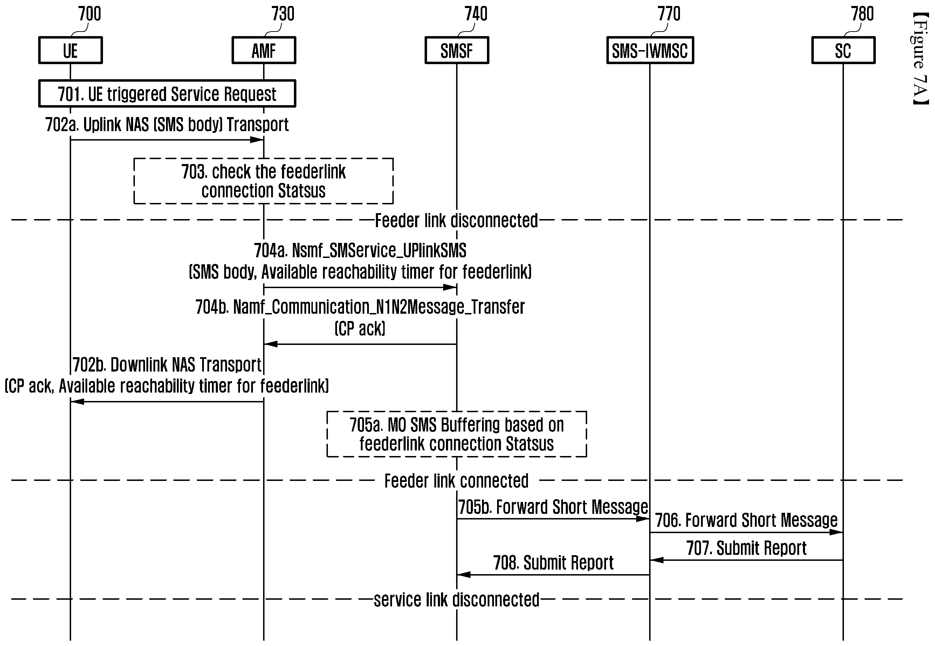

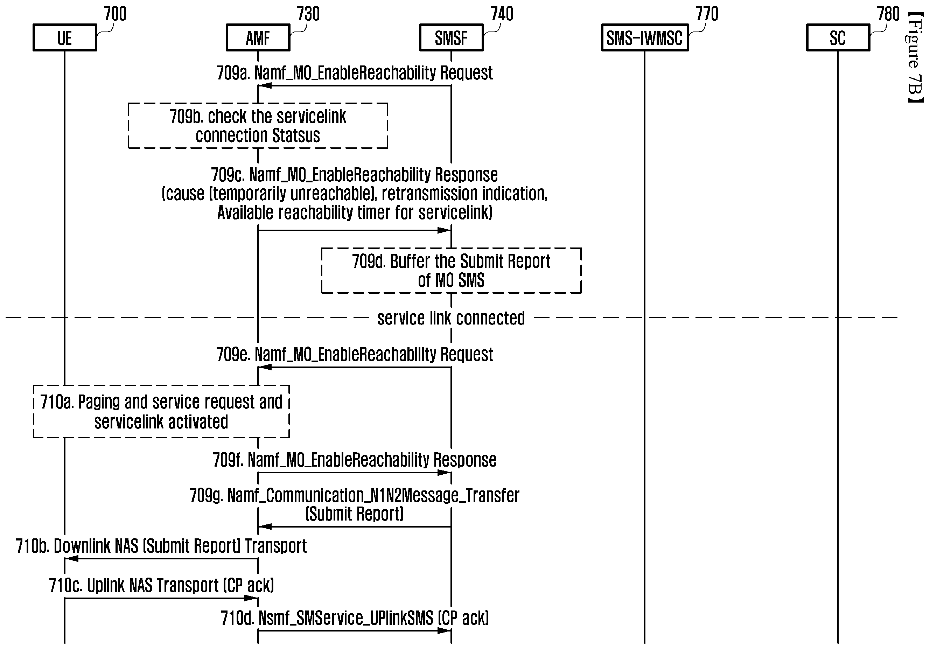

FIG. 7A and FIG. 7B are a sequence diagram for transmitting network structure and related information for supporting on a satellite an MO SMS service requested by a UE by utilizing a 5G system-based control plane according to an embodiment of the disclosure.

According to an embodiment of the disclosure, an AMF and an SMSF may be located in a satellite as a 5G NF to support SMS services using the control plane, and an SMS-IWMSC/SMS-GMSC/SC and HSS may be located at a ground station.

At step 701, if the UE 700 cannot find a connection to a ground gNB, it may perform a network registration procedure and a service request procedure using the satellite's gNB. The request for the corresponding operation may be made when the service link between the UE and the satellite is connected. Here, when the UE proceeds with the network registration or service request procedure, to utilize a control message-based SMS service using the SMSF, it may request a 'SMS over NAS' based service. In addition, the network may determine whether the corresponding operation is supported by an NF in the satellite and whether the 'SMS over NAS' service is accepted. If the NF in the satellite supports the corresponding operation, the network may determine to support the service requested by the UE.

At step 702a, to use a SMS service utilizing the NAS, the UE 700 may include an MO SMS message in a UL NAS Transport message and transmit it to the AMF 730.

At step 703, upon receiving the MO SMS message from the UE 700, the AMF 730 may check the connection status of the feeder link.

At step 704a, if the feeder link between the satellite and the ground station is not connected, the AMF 730 may include the MO SMS body and available reachability timer for feederlink information together in a Nsmf_SMService_UPlinkSMS message and transmit it to the SMSF 740.

At step 704b, the SMSF 740 may notify the AMF 730 that the MO message has been successfully received.

At step 702b, upon receiving a notification indicating successful reception of the MO SMS message from the SMSF 740, the AMF 730 may transmit the reception status of the corresponding MO SMS message to the UE 700 via the DL NAS Transport. If there is no feeder link connection between the satellite and the ground station, the DL NAS Transport may carry a Reception of MO SMS message indicating whether the MO SMS message has been received and an available time for feederlink together. Upon receiving the available time for feederlink information, the UE may predict that Delivery of MO SMS is possible after the corresponding time and does not perform a retransmission operation of the MO SMS message before that time. If the UE fails to receive the Delivery of MO SMS message after the available time for feederlink, the UE may perform a retransmission operation of the MO SMS message. If the service link between the UE and the satellite is connected after a specific time has passed since the feeder link connection between the satellite and the ground station, the MME-On may set an additional offset of about 5 to 15 minutes for the available time for feederlink to notify the UE of the usable time for receiving Delivery of MO SMS.

At step 705a, if the feeder link between the satellite and the ground station is not connected, the SMSF 740 may buffer the MO SMS message for a time corresponding to the available time for feederlink.

If the feeder link between the satellite and the ground station is connected at step 703, the AMF 730 may transmit the SMSF 740 a Nsmf_SMService_UPlinkSMS message including the SMS body information only.

At step 705b, if the feeder link between the satellite and the ground station is connected after the available time for feederlink, the SMSF 740 may transfer the buffered MO message to the SMS-IWMSC 770. If the feeder link between the satellite and the ground station is connected at step 703, the SMSF 740 may transfer the MO message to the SMS-IWMSC 770 without further processing.

At step 706, the SMS-IWMSC 770 may forward the MO SMS message received from the SMSF 740 to the SC 780.

At step 707, after receiving the MO SMS message through the SMS-IWMSC 770, the SC 780 may generate a delivery report of MO SMS message indicating that the MO SMS message transmitted by the UE has been successfully delivered to the SC, and the SMS-IWMSC 770 may receive the delivery report of MO SMS message from the SC 780.

At step 708, the SMS-IWMSC 770 may forward the delivery report of MO SMS message received from the SC 780 to the SMSF 740 in the satellite.

At step 709a, the SMSF 740 may transmit a Namf_MO_EnableReachability Request message to the AMF 730 to request the UE's connection status for forwarding the delivery report of MO SMS message.

In step 709b, upon receiving the Namf_MO_EnableReachability Request message, the AMF 730 may check the information about the service link between the satellite and the UE.

At step 709c, if the service link between the satellite and the UE is not connected, the AMF 730 may transmit information such as cause (temporarily unreachable), retransmission indication, or available reachability timer for servicelink to the SMSF 740 by use of a Namf_MO_EnableReachability Response message.

In step 709d, based on the information in the Namf_MO_EnableReachability Response message, the SMSF 740 may buffer the delivery report of MO SMS message for a time corresponding to the available time for servicelink.

In step 709e, after the available time for servicelink time, the SMSF 740 may transmit a Namf_MO_EnableReachability Request message to the AMF 730 to request the connection status of the UE for forwarding the delivery report of MO SMS message.

At step 710a, if the service link between the satellite and the UE is connected but is in CM-IDLE state, paging and service request operations may be performed for connecting the UE to the control plane through the service link connection.

At step 709f, the AMF 730 may transfer the SMSF 740 response information indicating that the service link between the UE and the satellite is connected by use of a Namf_MO_EnableReachability Request message.

At step 709g, the SMSF 740 may transfer the buffered submit report information to the AMF 730 by use of a Namf_Communication_N1N2Message_Transfer message.

In step 710b, the AMF 730 may transfer the submit report of MO SMS message received from the SMSF 740 to the UE 700 by use of a DL NAS Transport message.

At steps 710c and 710d, the UE 700 may transmit response information indicating successful reception of the submit report of MO SMS message to the AMF 730 and the SMSF 740 in the satellite by use of a UL NAS Transport message.

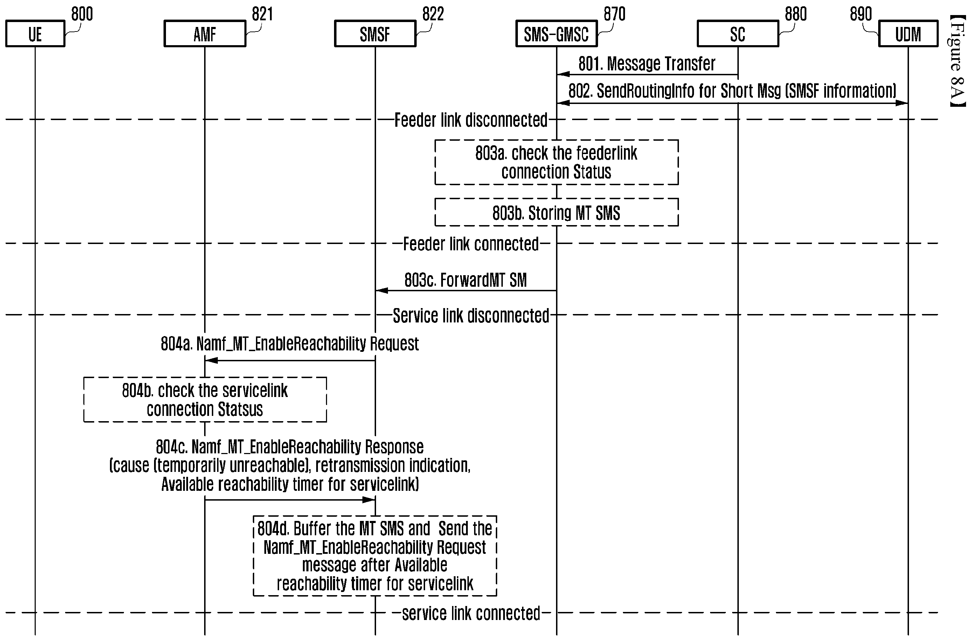

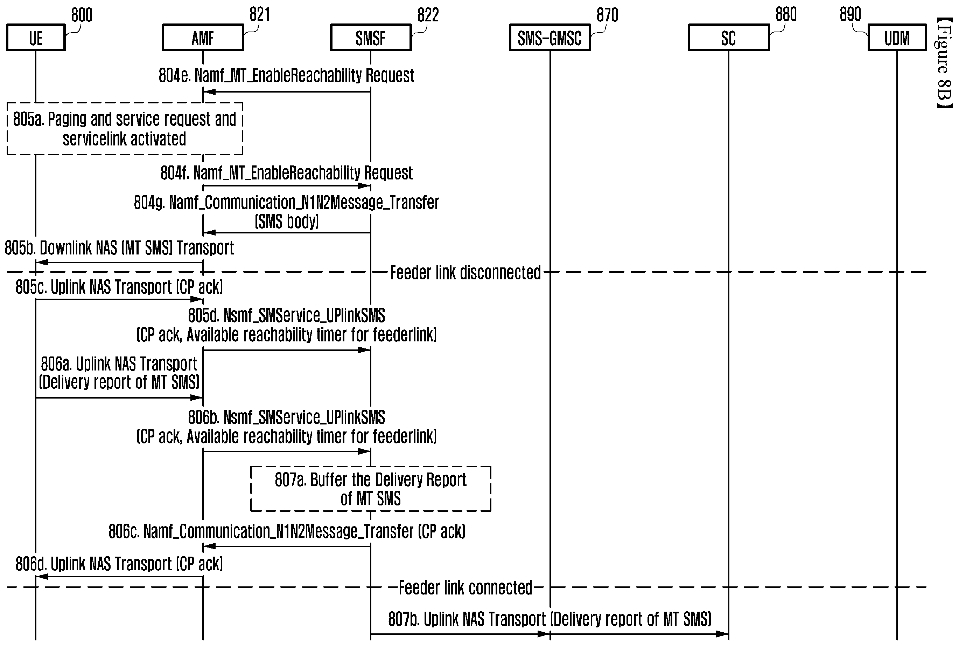

FIG. 8A and FIG. 8B are a sequence diagram for transmitting network structure and related information for supporting on a satellite an MT SMS service requested by the SC by utilizing a 5G system-based control plane according to an embodiment of the disclosure.

According to an embodiment of the disclosure, an AMF and an SMSF may be located in a satellite as a 5G NF to support SMS services using the control plane, and an SMS-IWMSC/SMS-GMSC/SC and HSS may be located at a ground station.

At step 801, the SC 880 may transmit a message to the SMS-GMSC 870. The message transmitted by the SC 880 may be an MT SMS message.

At step 802, the UDM 890 and the SMS-GMSC 870 may transmit and receive information about the SMSF to which the corresponding MT SMS is to be delivered. This SMSF information may be information included in a SendRoutinginfo for Short message for transmission.

At step 803a, upon receiving the MT SMS message from the SC 880, the SMS-GMSC 870 may check the connection status of the feeder link.

At step 803b, the SMS-GMSC 870 may store the MT SMS message received from the SC 880.

At step 803c, if the feeder link between the satellite and the ground station is connected, the SMS-GMSC 870 may transfer the MT SMS message to the SMSF 822.

At step 804a, the SMSF 822 may transmit a Namf_MT_EnableReachability Request message to the AMF 821 to request the connection status of the UE for forwarding the delivery report of MT SMS message.

At step 804b, upon receiving the Namf_MT_EnableReachability Request message, the AMF 821 may check information about the service link between the satellite and the UE.

At step 804c, if the service link between the satellite and the UE is not connected, the AMF 821 may transfer the SMSF 822 the information such as cause (temporarily unreachable), retransmission indication, or available reachability timer for servicelink by use of a Namf_MT_EnableReachability Response message.

At step 804d, the SMSF 822 may buffer the MT SMS message for a time corresponding to the available time for servicelink based on the information in the Namf_MT_EnableReachability Response message.

At step 804e, after the available time for servicelink, to deliver the MT SMS message, the SMSF 822 may transmit a Namf_MT_EnableReachability Request message to the AMF 821 to request the connection status of the UE.

At step 805a, if the service link between the satellite and the UE is connected but is in CM-IDLE state, paging and service request operations may be performed for connecting the UE to the control plane through the service link connection.

At step 804f, the AMF 821 may transfer the SMSF 822 response information indicating that the service link between the UE and the satellite is connected by use of a Namf_MT_EnableReachability Request message.

In step 804g, the SMSF 822 may transfer the buffered SMS body information to the AMF 821 by use of a Namf_Communication_N1N2Message_Transfer message.

In step 805b, the AMF 821 may forward the MT SMS received from the SMSF 822 to the UE 800 by use of a DL NAS Transport message.

At steps 805c and 805d, the UE 800 may transmit a CP ack to the AMF 821 and the SMSF 822 in the satellite by use of a UL NAS Transport message.

At steps 806a and 806b, the UE 800 may transmit a delivery report of MT SMS to the AMF 821 and the SMSF 822 in the satellite by use of a UL NAS Transport message.

At step 807a, the SMSF 822 may buffer the delivery report of MO SMS message.

At step 806c, the SMS 822 may forward the Namf_Communication_N1N2Message-Transfer (CP ack) message to the AMF 821.

At step 806d, the AMF 821 may forward the CP ack received from the SMSF 822 to the UE 800 by use of a UL NAS Transport message.

At step 807b, the SMSF 822 may deliver the delivery report of MT SMS message to the SMS-GMSC 870 or SC 880 by use of a UL NAS Transport message.

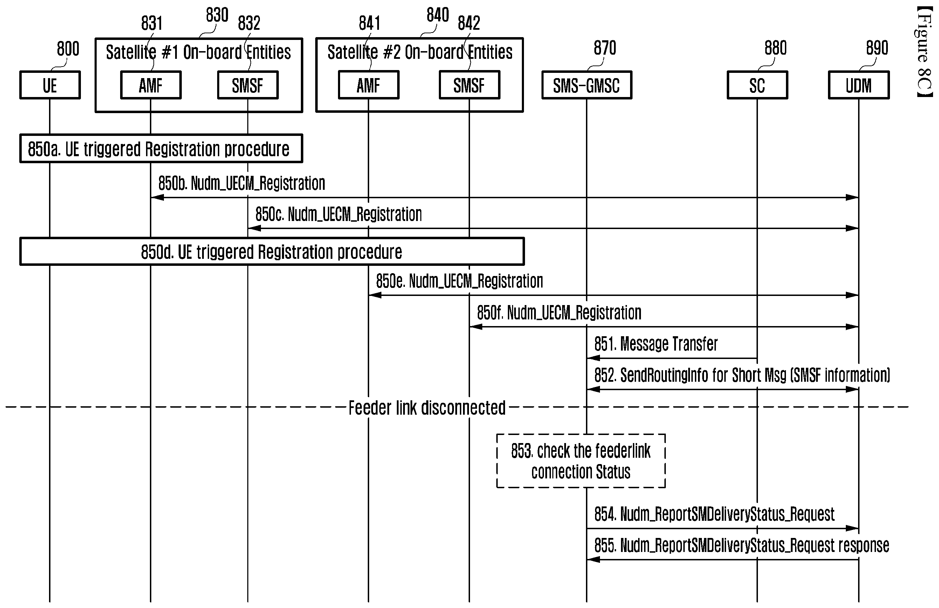

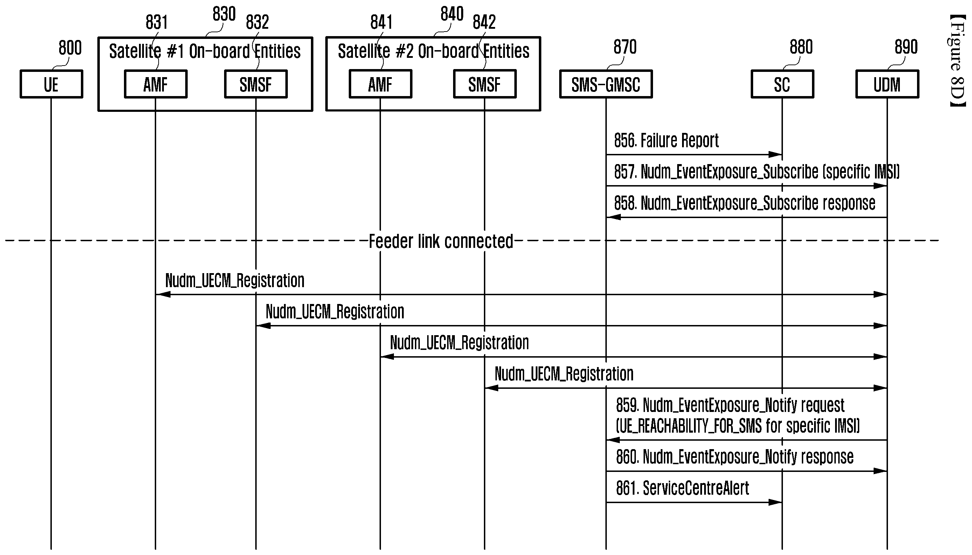

FIG. 8C and FIG. 8D are a sequence diagram for transmitting network structure and related information for supporting through multiple satellites an MT SMS service requested by the SC by utilizing a 5G system-based control plane according to an embodiment of the disclosure.

According to an embodiment of the disclosure, when using an MT-SMS service utilizing a satellite system composed of one or more satellites, each satellite may deliver a Nudm_UECM_Registration message containing information such as a user registered on the satellite to the UDM prior to steps 801 and 802 of FIGS. 8A and 8B. Through this, the SMS-GMSC having received an MT SMS message at step 801 from the SC may receive information about the satellite supporting the corresponding UE and information about the satellite on-board AMF and SMSF mapped to the corresponding satellite from the UDM via a Nudm_UECM_SendRoutingInfoForSM message.

According to an embodiment of the disclosure, if there is no feeder link connection between the satellite and the ground station, the SMS-GMSC may be unable to transfer the MT SMS message from the UDM to the message server (SMSF) address for MT SMS transmission. According to an embodiment of the disclosure, it may be assumed that there exists an entity managing the mobility of a satellite in a separate ground station according to the settings of the satellite network operator, and the SMS-GMSC, as an entity managing the mobility of the corresponding satellite, may request and receive status information and connection status information of the satellite requesting a connection from the mobility-managing entity based on the address of the message server (SMSF) to which the MT SMS received from the UDM is to be delivered.

At step 850a, if the UE 800 cannot find a connection to a separate ground station (gnodeB), it may perform a network registration procedure and a service request procedure by using the gnode B of a satellite (satellite #1) that services the UE's location at a specific time T1. The request for the corresponding operation may be made when the service link between the UE and the satellite is connected.

At step 850b, the AMF 831 in the satellite (satellite #1) may transmit the UDM 890 a Nudm_UECM_Registration message including information about the UE in the ground station and currently connected to the satellite. The Nudm_UECM_Registration message may include satellite-related information such as a satellite ID and information on NFs in the satellite (AMF ID or the like).

At step 850c, the SMSF 832 in the satellite (satellite #1) may transmit the UDM 890 a Nudm_UECM_Registration message including information about the UE in the ground station and currently connected to the satellite. The Nudm_UECM_Registration message may include satellite-related information such as a satellite ID, and information about SUPI, SMSF identity, SMSF address, access type(s), or the like.

At step 850d, when time T2 has elapsed since the connection to the satellite (satellite #1), if the satellite (satellite #2) servicing the location of the UE at time T1+T2 changes, the UE may perform a network registration procedure and a service request procedure by using the gnodeB of the new satellite (satellite #2). The request for the corresponding operation may be made when the service link between the UE and the satellite is connected.

At step 850e, the AMF 841 in the satellite (satellite #2) may transmit the UDM 890 a Nudm_UECM_Registration message including information about the UE in the ground station and currently connected to the satellite. The Nudm_UECM_Registration message may include satellite-related information such as a satellite ID and information on NFs in the satellite (AMF ID or the like).

At step 850f, the SMSF 842 in the satellite (satellite #2) may transmit the UDM 890 a Nudm_UECM_Registration message including information about the UE in the ground station and currently connected to the satellite. The Nudm_UECM_Registration message may include satellite-related information such as a satellite ID, and information about SUPI, SMSF identity, SMSF address, access type(s), or the like.

At step 850f, when updated information supporting the corresponding UE (SUPI) (e.g., satellite-related information such as a new satellite ID and information on NFs in the satellite) is received, the UDM may delete the information about the existing satellite (satellite #1) and may perform an update operation on the UE-related information based on the information included in the Nudm_UECM_Registration message received from the new satellite (satellite #2). The UDM may receive information (e.g., ID, IP address) about the NF (AMF, SMSF or the like) in the satellite supporting the UE directly from the satellite, or receive a satellite ID or AMF ID or the like from the satellite's AMF, and obtain information (e.g., IP address) about the NF (AMF, SMSF or the like) in the satellite supporting the UE based on information provided by the satellite network operator, and store it in the UDM.

At step 851, the SC 880 may forward the MT SMS message to the SMS-GMSC 870.

At step 852, the SMS-GMSC 870 may request the address of the message server (SMSF) to which the corresponding MT SMS will be delivered from the UDM 890 by use of a Nudm_UECM_SendRoutingInfoForSM message. Based on the SUPI information in the corresponding request message, the UDM 890 may transfer the address (e.g., IP address) of the message server (SMSF on-board/satellite) to which the corresponding UE is connected, to the SMS-GSMC 870.

At step 853, the SMS-GMSC 870 may receive status information regarding the connection (feeder link) with the corresponding satellite from the entity managing the mobility of the corresponding satellite, based on the address of the message server (SMSF) to which the MT SMS is to be delivered received from the HSS, and the information about the corresponding satellite. If the satellite (satellite #1 or satellite #2) serving the UE and the ground station are connected (feeder link), the SMS-GMSC may deliver the MT SMS message to the UE 800 through the procedure from step 803c to step 807b of FIGS. 8A and 8B.

If the SMS-GMSC 870 checks the status information of the connection (feeder link) with the corresponding satellite at step 853 based on the entity managing the mobility of the corresponding satellite, the address of the message server to which the MT SMS is to be delivered received from the HSS, and the corresponding satellite information, and finds that there is no connection (feeder link) between the corresponding satellite and the ground station, the SMS-GMSC 870 may determine that the status is "UE is not reachable", and may generate the corresponding cause information and transmit this information to the UDM, and then determine to perform the failure report operation toward the SC.

At steps 854 and 855, if the SMS-GMSC 870 is unable to connect to the satellite indicated by the UDM 890 at step 853, the SMS-GMSC 870 may notify the UDM 890 that the MT SMS message has not been delivered by use of a Nudm_ReportSMDeliveryStatus_Request message. The SMS-GMSC 870 may transmit the UDM 890 a Nudm_ReportSMDeliveryStatus_Request message that includes User Identifier, SM Delivery Outcome including error cause information (absent user or UE is not reachable), and SC address (service center address).

At step 856, the SMS-GMSC 870 may notify the SC 880 that the delivery of the specific user's MT SMS message has failed through a failure report operation.

At steps 857 and 858, to receive a notification of an event occurring when the UE becomes reachable to the SMS (i.e., when the UE is connected to the AMF while the SMSF is actually registered or when the UE is registered to the SMSF), the SMS-GMSC 870 may make a subscription request for specific UE-related event notifications to the UDM 890 by use of a Nudm_EventExposure_Subscribe message.

At steps 859 and 860, when a specific UE (UE#1) performs a network registration procedure via a satellite as in steps 850a to 850f, the AMF and SMSF may receive information about the satellite to which the corresponding UE (UE#1) is connected or the like from the UDM by use of a Nudm_UECM_Registration message. The UDM 890 may transmit a notification of a subscription event (UE_REACHABILITY_FOR_SMS) occurring from the specific UE (UE#1) in steps 857 and 858 to the SMS-GMSC 870 by use of a Nudm_EventExposure_Notify message.

At step 861, upon receiving a notification that UE#1 is connected, the SMS-GMSC 870 may forward this to the SC 880 to request a retransmission operation of the pending MT SMS message related to UE#1. Thereafter, operations for MT SMS delivery to UE #1 utilizing a satellite may be performed through steps 801 to 807b of FIGS. 8A and 8B.

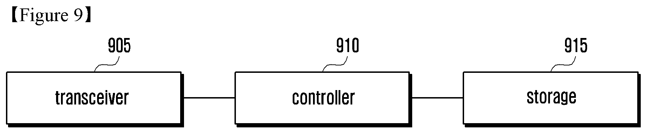

FIG. 9 is a diagram illustrating the structure of a UE according to an embodiment of the disclosure.

With reference to FIG. 9, the UE may include a transceiver 905, a controller 910, and a storage 915. In the disclosure, the controller may be defined as a circuit, an application-specific integrated circuit, or at least one processor.

The transceiver 905 may transmit and receive signals to and from other network entities. The transceiver 905 may, for example, receive system information from a base station and receive a synchronization signal or a reference signal.

The controller 910 may control the overall operation of a network entity according to an embodiment proposed in the disclosure. For example, the controller 910 may control the signal flow between blocks to perform operations according to the flowchart described above. Specifically, the controller 910 may control the operation proposed in the disclosure to transmit a signal in a multi-beam based system according to an embodiment of the disclosure.

The storage 915 may store at least one of the information transmitted and received through the transceiver 905 or the information generated through the controller 910.

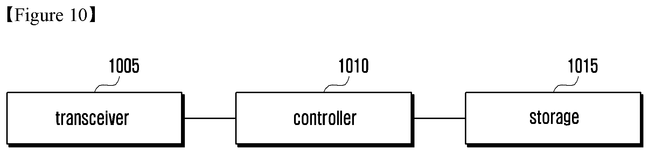

FIG. 10 is a diagram illustrating the structure of a network entity according to an embodiment of the disclosure.

With reference to FIG. 10, the network entity may include a transceiver 1005, a controller 1010, and a storage 1015. In the disclosure, the controller may be defined as a circuit, an application-specific integrated circuit, or at least one processor.

The transceiver 1005 may transmit and receive signals to and from other network entities. The transceiver 1005 may, for example, transmit system information to a UE and may transmit a synchronization signal or a reference signal.

The controller 1010 may control the overall operation of a network entity according to an embodiment proposed in the disclosure. For example, the controller 1010 may control the signal flow between blocks to perform operations according to the flowchart described above. Specifically, the controller 1010 may control the operation proposed in the disclosure to transmit a signal in a multi-beam based system according to an embodiment of the disclosure.

The storage 1015 may store at least one of the information transmitted and received through the transceiver 1005 or the information generated through the controller 1010.

The methods according to the embodiments described in the claims or specification of the disclosure may be implemented in the form of hardware, software, or a combination thereof.

When implemented in software, a computer-readable storage medium storing one or more programs (software modules) may be provided. The one or more programs stored in the computer-readable storage medium may be configured to be executable by one or more processors of an electronic device. The one or more programs may include instructions that cause the electronic device to execute the methods according to the embodiments described in the claims or specification of the disclosure.

Such a program (software module, software) may be stored in a random access memory, a nonvolatile memory such as a flash memory, a read only memory (ROM), an electrically erasable programmable read only memory (EEPROM), a magnetic disc storage device, a compact disc ROM (CD-ROM), a digital versatile disc (DVD), other types of optical storage devices, or a magnetic cassette. Or, such a program may be stored in a memory composed of a combination of some or all of them. In addition, a plurality of component memories may be included.

In addition, such a program may be stored in an attachable storage device that can be accessed through a communication network such as the Internet, an intranet, a local area network (LAN), a wide area network (wide LAN), or a storage area network (SAN), or through a communication network composed of a combination thereof. Such a storage device may access the equipment that carries out an embodiment of the disclosure through an external port. In addition, a separate storage device on a communication network may access the equipment that carries out an embodiment of the disclosure.

In the embodiments of the disclosure described above, the elements included in the disclosure are expressed in a singular or plural form according to the presented specific embodiment. However, the singular or plural expression is appropriately selected for ease of description according to the presented situation, and the disclosure is not limited by a single element or plural elements. Those elements described in a plural form may be configured as a single element, and those elements described in a singular form may be configured as plural elements.

Specific embodiments have been described in the detailed description of the disclosure, but various modifications are possible without departing from the scope of the disclosure. Therefore, the scope of the disclosure should not be limited to those embodiments described above, but should be determined according to the patent claims described later and their equivalents.

## Claims

1. A method performed by a first mobility management entity (MME) in a wireless communication system, the method comprising:
receiving, from a user equipment (UE), an uplink (UL) non-access-stratum (NAS) transport message including a mobile oriented (MO) short message service (SMS);
transmitting, to the UE, a downlink (DL) NAS transport message including information indicating whether the MO SMS has been received in case that a feeder link is disconnected; and
transmitting, to a second MME, the MO SMS in case that the feeder link is connected,
wherein the first MME and the second MME are separated.

2. The method of claim 1, wherein:
the first MME is located on a satellite; and
the second MME is located at a ground station.

3. The method of claim 1, further comprising:
buffering the MO SMS for a preconfigured time in case that the feeder link is disconnected.

4. The method of claim 1, further comprising:
storing the MO SMS in case that the feeder link is disconnected.

5. A method performed by a user equipment (UE) in a wireless communication system, the method comprising:
transmitting, to a first mobility management entity (MME), an uplink (UL) non-access-stratum (NAS) transport message including a **mobile oriented (MO)** short message service (SMS); and
receiving, from the first MME, a downlink (DL) NAS transport message including information indicating whether the MO SMS has been received in case that a feeder link is disconnected,
wherein the MO SMS is forwarded from the first MME to a second MME in case that the feeder link is connected,
wherein the first MME and the second MME are separated.

6. The method of claim 5, wherein:
the first MME is located on a satellite; and
the second MME is located at a ground station.

7. The method of claim 5, wherein the MO SMS is buffered for a preconfigured time in case that the feeder link is disconnected.

8. The method of claim 5, wherein the MO SMS is stored in case that the feeder link is disconnected.

9. A first mobility management entity (MME) in a wireless communication system, comprising:
a transceiver capable of transmitting and receiving at least one signal; and
a controller coupled to the transceiver,
wherein the controller is configured to:
receive, from a user equipment (UE), an uplink (UL) non-access-stratum (NAS) transport message including a **mobile oriented (MO)** short message service (SMS); and
transmit, to the UE, a downlink (DL) NAS transport message including information indicating whether the MO SMS has been received in case that a feeder link is disconnected, and
transmit, to a second MME, the MO SMS in case that the feeder link is connected,
wherein the first MME and the second MME are separated.

10. The first MME of claim 9, wherein:
the first MME is located on a satellite; and
the second MME is located at a ground station.

11. The first MME of claim 9, wherein the controller is further configured to buffer the MO SMS for a preconfigured time in case that the feeder link is disconnected.

12. The first MME of claim 9, wherein the controller is further configured to store the MO SMS in case that the feeder link is disconnected.

13. A user equipment (UE) in a wireless communication system, comprising:
a transceiver capable of transmitting and receiving at least one signal; and
a controller coupled to the transceiver,
wherein the controller is configured to:
transmit, to a first mobility management entity (MME), an uplink (UL) non-access-stratum (NAS) transport message including a **mobile oriented** (MO) short message service (SMS); and
receive, from the first MME, a downlink (DL) NAS transport message including information indicating whether the MO SMS has been received in case that a feeder link is disconnected,
wherein the MO SMS is forwarded from the first MME to a second MME in case that the feeder link is connected,
wherein the first MME and the second MME are separated.

14. The UE of claim 13, wherein:
the first MME is located on a satellite; and
the second MME is located at a ground station.

15. The UE of claim 13, wherein in case that the feeder link is disconnected, the MO SMS is buffered for a preconfigured time, and the MO SMS is stored.
